# EUROPÄISCHE PATENTANMELDUNG

(11) **EP 3 474 197 A1**
(43) Veröffentlichungstag der Anmeldung: **24.04.2019**
(21) Anmeldenummer: 17197148.4
(22) Anmeldetag: 18.10.2017
(51) Int. Cl.: G06Q 10/06, G06Q 10/08

(54) **SYSTEM UND VERFAHREN IN EINER INDUSTRIEANLAGENUMGEBUNG**

(71) Anmelder: IBN Systems GmbH, 86825 Bad Wörishofen (DE)
(72) Erfinder: MIKULINA, Igor, 86825 Bad Wörishofen (DE); KERNSCHMIDT, Konstantin Emanuel Thassilo, 86825 Bad Wörishofen (DE)
(74) Vertreter: TBK

(57) **Zusammenfassung**

Maßnahmen bzw. Mittel zur Realisierung eines Industrieanlagensystems werden bereitgestellt. Solche Maßnahmen bzw. Mittel umfassen beispielhaft ein Speichern, bei jeder aus der zumindest einen Industrieanlagenkomponentenverwaltungsvorrichtung, eines Fähigkeitsverzeichnisses der jeweilig zugeordneten Industrieanlagenkomponente, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, ein Speichern, bei der Industrieanlagenverwaltungsvorrichtung, der Fähigkeitsverzeichnisse der zumindest einen Industrieanlagenkomponente, und ein Kommunizieren, durch die Industrieanlagenverwaltungsvorrichtung, mit jeder aus der zumindest einen Industrieanlagenkomponentenverwaltungsvorrichtung unter Verwendung des durch das Fähigkeitsverzeichnis der jeweils zugeordneten Industrieanlagenkomponente umfassten Identifizierungszeichens.

## Beschreibung

### Technisches Gebiet

Die vorliegende Erfindung bezieht sich auf Systeme und Verfahren in einer Industrieanlagenumgebung. Insbesondere bezieht sich die vorliegende Erfindung auf Maßnahmen (einschließlich Verfahren, Vorrichtungen, und Computerprogrammprodukten) zur Realisierung eines Systems eines und Verfahren in einer Industrieanlagenumgebung. Beispielhaft bezieht sich die vorliegende Erfindung auf ein System und ein Verfahren in einer Industrie-4.0-Umgebung.

### Hintergrund

Immer mehr mittelständische Unternehmen erkennen die Chancen und Vorteile von Industrie 4.0, um ihre langfristige Wettbewerbsfähigkeit zu sichern. Bisher angebotene Industrie-4.0-Lösungen erfüllen dabei häufig jedoch nicht die spezifischen Anforderungen für den Mittelstand. Dies gilt sowohl für mittelständische Hersteller von Anlagen, Vorrichtungen und Komponenten, die "Industrie-4.0-fähige" Produkte entwickeln wollen, als auch für Betreiber mittelständischer verarbeitender Betriebe, die ihr Unternehmen digitalisieren möchten.

Eine Zusammenfassung einiger dieser Anforderungen wird nachfolgend gegeben.

Eine Anforderung betrifft die herstellerübergreifende Integration verschiedener Systeme. Insbesondere in mittelständischen Betrieben werden üblicherweise Anlagen, Vorrichtungen und Komponenten von unterschiedlichen, spezialisierten Herstellern eingesetzt. Um die Mehrwerte einer Digitalisierung, wie z.B. intelligentes Energiemanagement oder Predictive Maintenance, systemübergreifend zu nutzen, ist es notwendig, dass nicht nur jedes einzelne System "Industrie-4.0-fähig" ist, sondern dass die verschiedenen Systeme interoperabel sind und der Betreiber eine transparente Übersicht über alle Systeme seines Unternehmens erhält. Monopolistische Industrie-4.0-Lösungen einzelner Unternehmen sind daher für eine unternehmensweite Kopplung unterschiedlichster Systeme nicht geeignet.

Eine weitere Anforderung betrifft die Einhaltung von Vorschriften und Standards im Maschinen- und Anlagenbau. Hersteller im Maschinen- und Anlagenbau sind verpflichtet, die für ihre Systeme geltenden Vorschriften (z.B. CE-Konformität, Maschinenrichtlinien) einzuhalten und können bei Verstößen entsprechend haftbar gemacht werden. Sowohl für die Hersteller als auch für die Betreiber ist es daher von essentieller Bedeutung, dass klar definiert ist, welche Aktionen (z.B. Ausschalten einer Komponente, um Energie zu sparen) durch welches System ausgeführt werden darf. Eine direkte, unkontrollierte Vernetzung und Ansteuerung auf unterster Komponentenebene ist daher zur Gewährleistung von Safety- und Security-Anforderungen und aus der Haftungsperspektive heraus nicht realisierbar.

Eine weitere Anforderung betrifft die lokale Konfiguration einer aus dem Industrie-4.0-Kontext bekannten Smart Factory nach spezifischen Gegebenheiten. Die Konfiguration einer (digitalen) Produktion ist immer abhängig von spezifischen Randbedingungen (z.B. landesspezifische Gesetze für Grenzwerte, Klima, Größe der Produktionshalle, etc.). Durch Modernisierung oder Wachstum kommt es zudem häufig vor, dass sich die ursprüngliche Konfiguration im Laufe der Zeit ändert. Der Betreiber muss daher in der Lage sein, die Beziehungen zwischen den verschiedenen Industrie-4.0-Produkten zu definieren. Zudem sollte der Betreiber selbst entscheiden können, welche Drittanbieterapplikationen und Dienste (beispielsweise Cloud-Dienste) er in Anspruch nehmen möchte, bzw. welche Daten er den jeweiligen Herstellern (z.B. zu Wartungszwecken) zur Verfügung stellen möchte. Eine direkte Vernetzung der verschiedenen Systeme mit den Clouds der jeweiligen Hersteller kann eine solche Konfiguration nicht ermöglichen. Zudem ist so für den Betreiber häufig nicht ersichtlich, welche Daten übertragen werden (was wiederum Auswirkungen auf die vorgenannte Haftung Einfluss haben kann).

Weitere Anforderungen werden an die Interoperabilität gestellt. Insbesondere aus Vorgenanntem ist ersichtlich, dass ein reibungsloser und damit weitestgehend automatisierter Fluss von Informationen vorausgesetzt wird. Aufbauend auf der Integrierbarkeit beschreibt Interoperabilität die Fähigkeit der Komponenten, basierend auf einem gemeinsamen konzeptionellen Modell Informationen und digitale Services miteinander auszutauschen sowie die Interpretation der Information im Kontext zu ermöglichen. Dies beinhaltet den automatischen oder automatisierten Informationsaustausch. Die Interoperabilität ist also keine Maßnahme, sondern eine Eigenschaft oder ein Zustand, also eine Fähigkeit.

Interoperabilität bedeutet im Kontext Industrie 4.0 ausdrücklich auch, branchenübergreifend kommunizieren und interoperieren zu können. Diese notwendige Interoperabilität ist heute nicht gegeben. In mangelnder Interoperabilität der jeweils beteiligten Einzelkomponenten kann dabei eine der Barrieren für die Funktionsfähigkeit komplexer Informations- und Kommunikationstechnik-Systeme (IKT-Systeme) gesehen werden. Die Entwicklung von Kriterien zur Nutzung und zum Austausch von Daten unter mehreren Marktakteuren ist darum im Fokus von branchenübergreifenden Initiativen und der Forschungsförderung.

Ungeachtet dessen werden in mangelnder Interoperabilität auch vereinzelt Vorteile gesehen. Begünstigt durch dieses Defizit werden i.d.R. diejenigen Anbieter, deren Systeme den Markt bestimmen, da es mangelnde Interoperabilität ermöglicht, andere Anbieter auszuschließen.

Interoperabilität ist daher ein wichtiger Mechanismus, bestehende wirtschaftlich-technische Abhängigkeiten abzubauen.

Interoperabilität im Sinne der funktionalen Kompatibilität beinhaltet unter anderem die Gerätemerkmale Kommunikationsprotokoll, Kommunikationsinterface, Datenzugriff, Datentypen, Parametersemantik und Anwendungsfunktionalität. Interoperabilität bezeichnet somit die Fähigkeit eines Systems oder eines Produkts, mit anderen Systemen oder Produkten ohne spezifischen Aufwand seitens des Kunden zusammenzuarbeiten.

### Zusammenfassung

Verschiedene beispielhafte Ausführungsbeispiele der vorliegenden Erfindung zielen auf ein Angehen von zumindest Teilen der vorstehend genannten Belange und/oder Probleme und Nachteile. Insbesondere erfüllen verschiedene beispielhafte Ausführungsbeispiele der vorliegenden Erfindung zumindest Teile der vorstehend ausgeführten Anforderungen.

Verschiedene Aspekte beispielhafter Ausführungsbeispiele der vorliegenden Erfindung sind in den angehängten Ansprüchen dargelegt.

Gemäß einem ersten Aspekt der vorliegenden Erfindung wird ein Industrieanlagensystem bereitgestellt, mit
zumindest einer Industrieanlagenkomponente,
zumindest einer jeweils einer aus der zumindest einen Industrieanlagenkomponente zugeordneten Industrieanlagenkomponentenverwaltungsvorrichtung zur Ansteuerung und Verwaltung der jeweiligen Industrieanlagenkomponente, und
einer Industrieanlagenverwaltungsvorrichtung zur Ansteuerung und Verwaltung einer die zumindest eine Industrieanlagenkomponente umfassenden Industrieanlage, wobei
jede aus der zumindest einen Industrieanlagenkomponentenverwaltungsvorrichtung dazu eingerichtet ist, um ein Fähigkeitsverzeichnis der jeweilig zugeordneten Industrieanlagenkomponente zu speichern, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, und
die Industrieanlagenverwaltungsvorrichtung dazu eingerichtet ist, um
   die Fähigkeitsverzeichnisse der zumindest einen Industrieanlagenkomponente zu speichern, und
   mit jeder aus der zumindest einen Industrieanlagenkomponentenverwaltungsvorrichtung unter Verwendung des durch das Fähigkeitsverzeichnis der jeweils zugeordneten Industrieanlagenkomponente umfassten Identifizierungszeichens zu kommunizieren.

Gemäß einem zweiten Aspekt der vorliegenden Erfindung wird ein Verfahren für ein Industrieanlagensystem beretgestellt, mit
zumindest einer Industrieanlagenkomponente,
zumindest einer jeweils einer aus der zumindest einen Industrieanlagenkomponente zugeordneten Industrieanlagenkomponentenverwaltungsvorrichtung zur Ansteuerung und Verwaltung der jeweiligen Industrieanlagenkomponente, und
einer Industrieanlagenverwaltungsvorrichtung zur Ansteuerung und Verwaltung einer die zumindest eine Industrieanlagenkomponente umfassenden Industrieanlage, wobei das Verfahren umfasst
ein Speichern, bei jeder aus der zumindest einen Industrieanlagenkomponentenverwaltungsvorrichtung, eines Fähigkeitsverzeichnisses der jeweilig zugeordneten Industrieanlagenkomponente, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst,
ein Speichern, bei der Industrieanlagenverwaltungsvorrichtung, der Fähigkeitsverzeichnisse der zumindest einen Industrieanlagenkomponente, und
ein Kommunizieren, durch die Industrieanlagenverwaltungsvorrichtung, mit jeder aus der zumindest einen Industrieanlagenkomponentenverwaltungsvorrichtung unter Verwendung des durch das Fähigkeitsverzeichnis der jeweils zugeordneten Industrieanlagenkomponente umfassten Identifizierungszeichens.

Gemäß einem dritten Aspekt der vorliegenden Erfindung wird ein Industrieanlagensystem bereitgestellt, mit
zumindest einer Industrieanlagenkomponente,
zumindest einer jeweils einer aus der zumindest einen Industrieanlagenkomponente zugeordneten Industrieanlagenkomponentenverwaltungsvorrichtung zur Ansteuerung und Verwaltung der jeweiligen Industrieanlagenkomponente, und
einer Industrieanlagenverwaltungsvorrichtung zur Ansteuerung und Verwaltung einer die zumindest eine Industrieanlagenkomponente umfassenden Industrieanlage,
die ausgebildet sind durch
zumindest einen Prozessor,
zumindest einen Speicher einschließlich einem Computerprogramm-Code, und
zumindest eine Schnittstelle,
wobei der zumindest eine Prozessor mit dem zumindest einen Speicher und dem Computerprogramm-Code dazu eingerichtet ist, das System dazu zu bringen, die folgenden Schritte auszuführen:
   Speichern, bei jeder aus der zumindest einen Industrieanlagenkomponentenverwaltungsvorrichtung, eines Fähigkeitsverzeichnisses der jeweilig zugeordneten Industrieanlagenkomponente, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst,
   Speichern, bei der Industrieanlagenverwaltungsvorrichtung, der Fähigkeitsverzeichnisse der zumindest einen Industrieanlagenkomponente, und
   Kommunizieren, durch die Industrieanlagenverwaltungsvorrichtung, mit jeder aus der zumindest einen Industrieanlagenkomponentenverwaltungsvorrichtung unter Verwendung des durch das Fähigkeitsverzeichnis der jeweils zugeordneten Industrieanlagenkomponente umfassten Identifizierungszeichens.

Gemäß einem vierten Aspekt der vorliegenden Erfindung wird ein Computerprogrammprodukt mit einem computerausführbaren Computerprogramm-Code bereitgestellt, der, wenn das Programm auf einem Computer (beispielsweise einem oder mehreren Computern von Vorrichtungen eines Systems gemäß einem vorgenannten systembezogenen Aspekt der vorliegenden Erfindung) ausgeführt wird, dazu eingerichtet ist, um den/die Computer dazu zu bringen, das Verfahren gemäß einem vorgenannten verfahrensbezogenen Aspekt der vorliegenden Erfindung auszuführen.

Ein solches Computerprogrammprodukt kann ein computerlesbares Medium umfassen, auf dem der computerausführbare Computerprogramm-Code gespeichert ist. Das Programm kann direkt in einen internen Speicher des Computers/der Computer oder einen Prozessor des/der Computers ladbar sein.

Jeder der vorgenannten Aspekte ermöglicht es, vorstehend diskutierten Anforderungen gerecht zu werden um dadurch zumindest einen Teil der in Bezug auf den Stand der Technik identifizierten Probleme und Nachteile zu lösen.

### Kurze Beschreibung der Zeichnungen

Figur 1 ist ein Blockdiagramm, das ein System gemäß beispielhafter Ausführungsbeispiele der vorliegenden Erfindung veranschaulicht,
Figur 2 ist ein Blockdiagramm, das ein System gemäß beispielhafter Ausführungsbeispiele der vorliegenden Erfindung veranschaulicht,
Figur 3 ist ein schematisches Diagramm einer Prozedur gemäß beispielhafter Ausführungsbeispiele der vorliegenden Erfindung,
Figur 4 (Figur 4(A) und 4(B)) ist ein schematisches Diagramm, das ein Fähigkeitsverzeichnis gemäß beispielhafter Ausführungsbeispiele der vorliegenden Erfindung veranschaulicht,
Figur 5 ist ein schematisches Diagramm, das eine Ebenengliederung gemäß beispielhafter Ausführungsbeispiele der vorliegenden Erfindung veranschaulicht,
Figur 6 ist ein schematisches Diagramm, das eine Erstellung eines Fähigkeitsverzeichnisses (Methodenliste) aus einem Methoden- und Datenverzeichnis veranschaulicht, und
Figur 7 ist ein Blockdiagramm, das eine alternative Veranschaulichung von Vorrichtungen gemäß beispielhafter Ausführungsbeispiele der vorliegenden Erfindung zeigt.

### Detaillierte Beschreibung von Zeichnungen und Ausführungsbeispielen der vorliegenden Erfindung

Die vorliegende Erfindung wird hiernach unter Bezugnahme auf bestimmte, nicht einschränkende Beispiele und auf gegenwärtig vorstellbare Ausführungsbeispiele der vorliegenden Erfindung beschrieben. Der Fachmann wird erkennen, dass die Erfindung in keiner Weise auf diese zur Veranschaulichung dienenden Beispiele beschränkt und breiter als diese Beispiele zu verstehen ist.

Insbesondere wird die vorliegende Erfindung im Kontext von Industrie 4.0 beschrieben. Zwar ist die Implementierung in einer solchen Umgebung eine bevorzugte Ausführungsform der vorliegenden Erfindung, die vorliegende Erfindung ist jedoch nicht darauf beschränkt. Insbesondere kann die Erfindung in jeder anderen Umgebung implementiert sein, solange dies mit den hierin beschriebenen Merkmalen vereinbar ist.

Hiernach werden verschiedene Ausführungsbeispiele und Implementierungen der vorliegenden Erfindung und deren Aspekte unter Verwendung verschiedener Varianten und/oder Alternativen beschrieben. Alle der beschriebenen Varianten und/oder Alternativen können allein oder in jeder vorstellbaren Kombination (einschließlich Kombinationen einzelner Merkmale der verschiedenen Varianten und/oder Alternativen) vorgesehen sein.

Allgemein werden gemäß beispielhafter Ausführungsbeispiele der vorliegenden Erfindung Systeme und Verfahren in einer Industrieanlagenumgebung bereitgestellt.

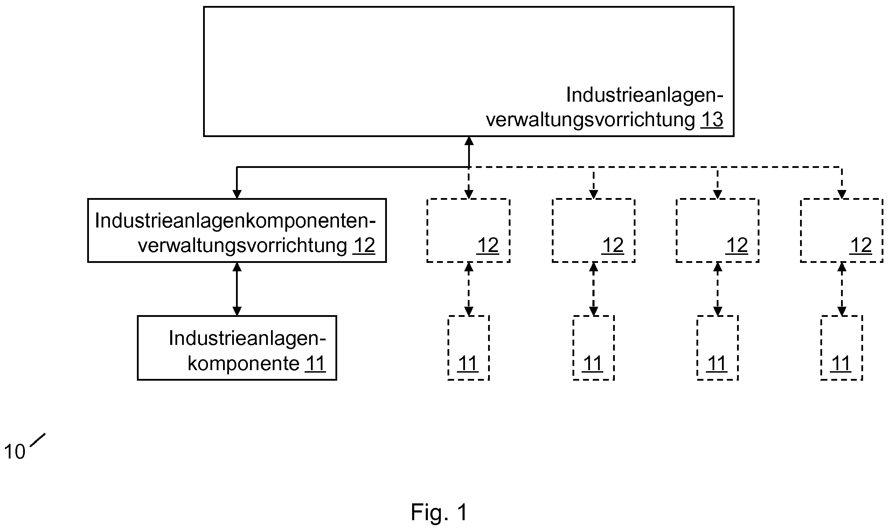

Figur 1 ist ein Blockdiagramm, das ein System gemäß beispielhafter Ausführungsbeispiele der vorliegenden Erfindung veranschaulicht. Das System 10 kann im Folgenden als Industrieanlagensystem bezeichnet werden.

Das System 10 (insbesondere Industrieanlagensystem 10) kann zumindest eine Industrieanlagenkomponente 11, zumindest eine jeweils einer aus der zumindest einen Industrieanlagenkomponente 11 zugeordnete Industrieanlagenkomponentenverwaltungsvorrichtung 12 zur Ansteuerung und Verwaltung der jeweiligen Industrieanlagenkomponente 11, und eine Industrieanlagenverwaltungsvorrichtung 13 zur Ansteuerung und Verwaltung einer die zumindest eine Industrieanlagenkomponente 11 umfassenden Industrieanlage aufweisen. Allgemein umfasst das System 10 also eine Industrieanlagenkomponente 11, eine Industrieanlagenkomponentenverwaltungsvorrichtung 12, und eine Industrieanlagenverwaltungsvorrichtung 13. Jede aus der zumindest einen Industrieanlagenkomponentenverwaltungsvorrichtung 12 speichert ein Fähigkeitsverzeichnis der jeweilig zugeordneten Industrieanlagenkomponente 11, wobei das Fähigkeitsverzeichnis eine Kommunikation mit der jeweiligen Industrieanlagenkomponente 11 spezifiziert und ein Identifizierungszeichen der jeweiligen Industrieanlagenkomponente 11 umfasst. Die Industrieanlagenverwaltungsvorrichtung 13 speichert die Fähigkeitsverzeichnisse der zumindest einen Industrieanlagenkomponente 11 (aller der zumindest einen Industrieanlagenkomponente 11). Ferner kommuniziert die Industrieanlagenverwaltungsvorrichtung 13 mit jeder aus der zumindest einen Industrieanlagenkomponentenverwaltungsvorrichtung 12 unter Verwendung des durch das Fähigkeitsverzeichnis der jeweils zugeordneten Industrieanlagenkomponente 11 umfassten Identifizierungszeichens.

Die Industrieanlagenkomponentenverwaltungsvorrichtung 12 kann im Folgenden als eine Verwaltungsschale (VS) bereitstellend bezeichnet werden. Dies beinhaltet beispielsweise Vorrichtungen, die eine solche Verwaltungsschale und deren Funktionalitäten wie nachstehend beschrieben bereitstellen. Wenn im Folgenden eine Verwaltungsschale genannt wird, dann bezieht sich dies immer auf die erfindungsgemäße Industrieanlagenkomponentenverwaltungsvorrichtung 12 bzw. das erfindungsgemäße Verfahren, die die Verwaltungsschale verkörpern bzw. deren Funktionalitäten bereitstellen.

Die Industrieanlagenverwaltungsvorrichtung 13 kann im Folgenden als eine Zentrale Verwaltungsschale (ZVS) bereitstellend bezeichnet werden. Dies beinhaltet beispielsweise Vorrichtungen, die eine solche Zentrale Verwaltungsschale und deren Funktionalitäten wie nachstehend beschrieben bereitstellen. Wenn im Folgenden eine Zentrale Verwaltungsschale genannt wird, dann bezieht sich dies immer auf die erfindungsgemäße Industrieanlagenverwaltungsvorrichtung 13 bzw. das erfindungsgemäße Verfahren, die die Zentrale Verwaltungsschale verkörpern bzw. deren Funktionalitäten bereitstellen.

Das Fähigkeitsverzeichnis wird im Folgenden auch Methodenliste genannt und entspricht einer Aufstellung von Merkmalen und Fähigkeiten der zugeordneten Industrieanlagenkomponente.

Industrieanlagenkomponenten gemäß der vorliegenden Spezifikation werden auch als Assets bezeichnet und umfassen beispielsweise insbesondere Anlagengegenstände und Anlageneinzelteile, elektronischen Baugruppen, Teilsysteme und Systeme, Maschinen, Anlagen und Anlagenverbünde. Assets können jedoch beispielsweise auch auf Dienste, Konzepte und Ideen, Pläne, Archive, und Programme ausgeweitet werden.

Das Asset wird durch seine Verwaltungsschale repräsentiert, die durch die erfindungsgemäße Industrieanlagenkomponentenverwaltungsvorrichtung bereitgestellt bzw. verkörpert wird.

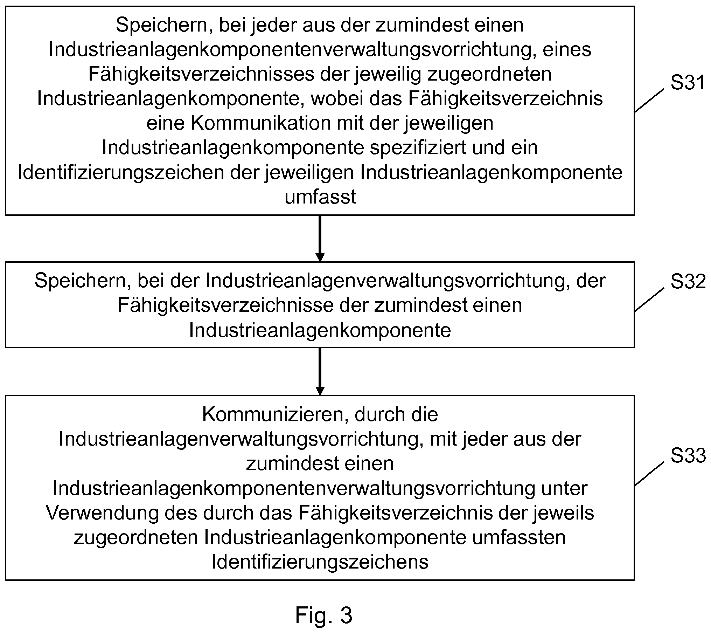

Figur 3 ist ein schematisches Diagramm eines Verfahrens gemäß beispielhafter Ausführungsbeispiele der vorliegenden Erfindung. Das System der Figur 1 kann das Verfahren der Figur 3 durchführen (kann dazu eingerichtet sein, um das Verfahren der Figur 3 durchzuführen), ist jedoch nicht auf dieses Verfahren beschränkt. Das Verfahren der Figur 3 kann durch das System der Figur 1 durchgeführt werden, ist jedoch nicht darauf beschränkt, durch dieses System durchgeführt zu werden.

Wie in Figur 3 veranschaulicht umfasst ein Verfahren gemäß beispielhaften Ausführungsbeispielen der vorliegenden Erfindung einen Schritt eines Speicherns (S31), bei jeder aus der zumindest einen Industrieanlagenkomponentenverwaltungsvorrichtung, eines Fähigkeitsverzeichnisses der jeweilig zugeordneten Industrieanlagenkomponente, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, einen Schritt eines Speicherns (S32), bei der Industrieanlagenverwaltungsvorrichtung, der Fähigkeitsverzeichnisse der zumindest einen Industrieanlagenkomponente, und einen Schritt eines Kommunizierens (S33), durch die Industrieanlagenverwaltungsvorrichtung, mit jeder aus der zumindest einen Industrieanlagenkomponentenverwaltungsvorrichtung unter Verwendung des durch das Fähigkeitsverzeichnis der jeweils zugeordneten Industrieanlagenkomponente umfassten Identifizierungszeichens.

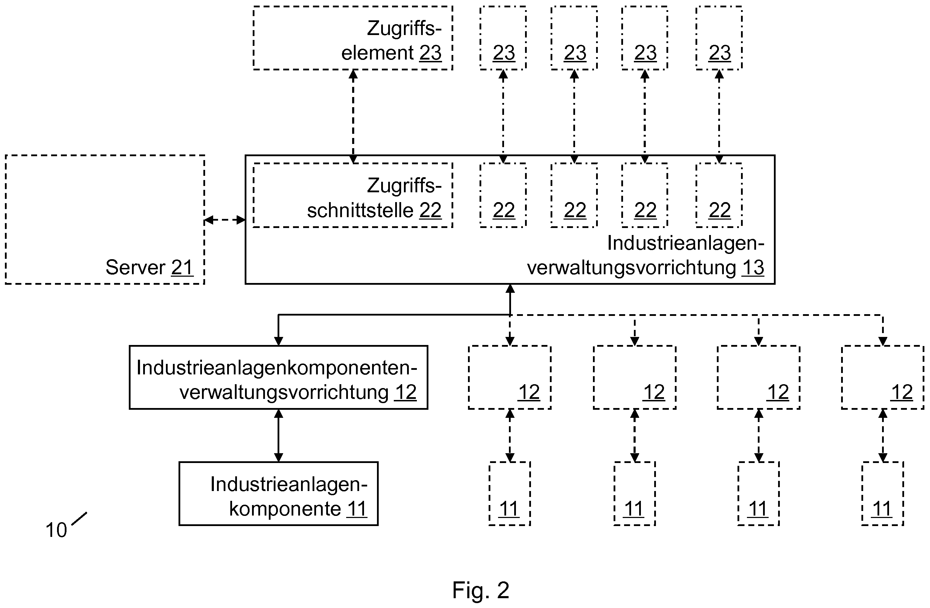

Figur 2 ist ein Blockdiagramm, das ein System gemäß beispielhafter Ausführungsbeispiele der vorliegenden Erfindung veranschaulicht. Insbesondere veranschaulicht Figur 2 eine Abwandlung des in Figur 1 veranschaulichten Systems. Das System gemäß Figur 2 kann daher ferner einen Server 21, Zugriffsschnittstellen 22, und/oder Zugriffselemente 23 aufweisen, wie nachstehend detaillierter beschrieben wird.

Insbesondere kann bei dem Industrieanlagensystem jedes der Fähigkeitsverzeichnisse zumindest einen hinterlegten statischen Komponentenparameter der jeweiligen Industrieanlagenkomponente, der für eine Eigenschaft der jeweiligen Industrieanlagenkomponente steht, und/oder eine Komponentenbetriebswertspezifizierung zumindest eines durch die jeweilige Industrieanlagenkomponente zu erfassenden dynamischen Komponentenbetriebswerts der jeweiligen Industrieanlagenkomponente, der für einen Zustand der jeweiligen Industrieanlagenkomponente steht, und/oder zumindest eine Synthesemethode zur auf zumindest einem durch das Fähigkeitsverzeichnis spezifizierten dynamischen Komponentenbetriebswert basierenden Generierung von Informationen für eine Ansteuerung und/oder Verwaltung der jeweiligen Industrieanlagenkomponente, und/oder zumindest eine Eingriffsmethode zum Eingriff in einen Betrieb der jeweiligen Industrieanlagenkomponente umfassen.

Statische Komponentenparameter sind beispielsweise Angaben zu einem Temperaturarbeitsbereich (beispielsweise untere und obere Grenze), Angaben zu vorgeschriebenen Wartungsintervallen, und Angaben zu Hersteller, Typ und Kategorie einer Industrieanlagenkomponente. Die statischen Komponentenparameter sind jedoch nicht auf die genannten Beispiele beschränkt

Dynamische Komponentenbetriebswerte, die für einen Zustand der Industrieanlagenkomponente stehen, sind beispielsweise eine Temperatur, eine Betriebsdauer, ein Zeitpunkt eines letzten Fehlers, und eine Drehzahl. Die dynamischen Komponentenbetriebswerte sind jedoch nicht auf die genannten Beispiele beschränkt, sondern beziehen sich allgemein insbesondere auf die Erfassung von Maschinendaten, also industrieanlagenkomponentenbezogene Ist-Daten und fertigungsbezogene Ist-Daten.

Eine Komponentenbetriebswertspezifizierung umfasst beispielsweise die Angabe des jeweiligen dynamischen Komponentenbetriebswerts, kann jedoch auch beispielsweise Erfassungsintervalle oder Bereitstellungsintervalle des jeweiligen dynamischen Komponentenbetriebswerts und vergleichbare Eigenschaften im Zusammenhang mit dynamischen Komponentenbetriebswerten umfassen.

Synthesemethoden zur Generierung von Informationen umfassen eine Verarbeitung, eine Analyse, eine Fusion, eine Interpretation und eine Synthetisierung von eingehenden Größen und sind beispielsweise eine Bestimmung, ob sich eine aktuelle Temperatur eines Assets im Arbeitsbereich des Assets (Industrieanlagenkomponente) befindet, basierend auf einer (gemessenen) aktuellen Temperatur der Industrieanlagenkomponente und einem vorgegebenen Temperaturarbeitsbereich mit dem Ergebnis, dass sich die Temperatur im Normalbereich oder in einem Anormalbereich befindet, eine Bestimmung einer Effizienz einer Industrieanlagenkomponente basierend auf einer Betriebsdauer und einer geplanten Ausgabemenge (Produktionsmenge) und einer Ist-Ausgabemenge (Ist-Produktionsmenge), eine Bestimmung einer mittleren Betriebsdauer zwischen Ausfällen basierend auf einer Betriebsdauer und einer Außerbetriebszeit und einem Zeitpunkt eines letzten Fehlers, und eine Bestimmung eines Fälligkeitszeitpunktes einer nächsten Wartung basierend auf verstrichenen Betriebsstunden des Assets und einer geplanten zukünftigen Auslastung und Vorgaben zu Wartungsintervallen. Die Synthesemethoden und die dadurch generierten Informationen sind jedoch nicht auf die oben dargestellten Beispiele beschränkt.

Ferner kann das Industrieanlagensystem einen Server, der dazu eingerichtet ist, um jeweils einen Schlüssel für jede aus der zumindest einen Industrieanlagenkomponente zu speichern, aufweisen. Dabei kann jeder der Schlüssel das Fähigkeitsverzeichnis der jeweiligen Industrieanlagenkomponente, das Identifizierungszeichen der jeweiligen Industrieanlagenkomponente, und eine Datenaustauschspezifizierung bezüglich mit der jeweiligen Industrieanlagenkomponente auszutauschenden Daten umfassen.

Zudem kann bei dem Industrieanlagensystem der Server ferner dazu eingerichtet sein, um Registrierungsinformationen und mit den jeweiligen Registrierungsinformationen verknüpfte Funktionsberechtigungen zu speichern.

Zudem kann bei dem Industrieanlagensystem der Server ferner dazu eingerichtet sein, um ein Fähigkeitsgerüst zu speichern. Dabei kann das Fähigkeitsgerüst eine Vielzahl von Komponentenparameterspezifizierungen jeweils eines statischen Komponentenparameters, eine Vielzahl von Komponentenbetriebswertspezifizierungen jeweils eines dynamischen Komponentenbetriebswerts, eine Vielzahl von Synthesemethoden zur Generierung von Informationen, und eine Vielzahl von Eingriffsmethoden zum Eingriff in einen Betrieb einer Industrieanlagenkomponente aufweisen. Ferner kann dabei jedes aus der Vielzahl von Komponentenparameterspezifizierungen, der Vielzahl von Komponentenbetriebswertspezifizierungen, der Vielzahl von Synthesemethoden, und der Vielzahl von Eingriffsmethoden zumindest einem Industrieanlagenkomponententyp zugeordnet sein.

Zudem kann bei dem Industrieanlagensystem das Fähigkeitsverzeichnis jedes der Schlüssel basierend auf dem Fähigkeitsgerüst und einem Industrieanlagenkomponententyp der jeweiligen Industrieanlagenkomponente erzeugt sein.

Zudem kann bei dem Industrieanlagensystem die Datenaustauschspezifizierung jedes der Schlüssel basierend auf dem Fähigkeitsverzeichnis des jeweiligen Schlüssels erzeugt sein.

Zudem kann bei dem Industrieanlagensystem der Server dazu eingerichtet sein, um einen der Schlüssel zu der Industrieanlagenverwaltungsvorrichtung zu übertragen. Dabei kann die Industrieanlagenverwaltungsvorrichtung dazu eingerichtet sein, um den einen der Schlüssel zu empfangen, und das Fähigkeitsverzeichnis der jeweiligen Industrieanlagenkomponente aus dem empfangenen Schlüssel zu extrahieren.

Zudem kann bei dem Industrieanlagensystem die Industrieanlagenverwaltungsvorrichtung dazu eingerichtet sein, um den empfangenen Schlüssel zu der Industrieanlagenkomponentenverwaltungsvorrichtung entsprechend der jeweiligen Industrieanlagenkomponente zu übertragen. Dabei kann die Industrieanlagenkomponentenverwaltungsvorrichtung dazu eingerichtet sein, um den Schlüssel zu empfangen, und das Fähigkeitsverzeichnis der jeweiligen Industrieanlagenkomponente aus dem empfangenen Schlüssel zu extrahieren.

Zudem kann bei dem Industrieanlagensystem die Industrieanlagenverwaltungsvorrichtung dazu eingerichtet sein, um ein Hinzufügen einer Industrieanlagenkomponente zu der Industrieanlage und das Identifizierungszeichen der hinzugefügten Industrieanlagenkomponente zu erkennen, und um basierend auf dem Identifizierungszeichen der hinzugefügten Industrieanlagenkomponente den Schlüssel bezüglich der hinzugefügten Industrieanlagenkomponente bei einem Server anzufordern.

Zudem kann bei dem Industrieanlagensystem die Industrieanlagenverwaltungsvorrichtung ferner dazu eingerichtet sein, um eine Zugriffsschnittstelle für ein Zugriffselement bereitzustellen, und eine der Zugriffsschnittstelle für das Zugriffselement zugeordnete Zugriffsberechtigungsinformation zu speichern, die darauf hinweist, ob das Zugriffselement berechtigt ist, über die Zugriffsschnittstelle auf einen statischen Komponentenparameter einer Zugriffsindustrieanlagenkomponente, und/oder einen dynamischen Komponentenbetriebswert der Zugriffsindustrieanlagenkomponente, und/oder eine Synthesemethode der Zugriffsindustrieanlagenkomponente, und/oder eine Eingriffsmethode der Zugriffsindustrieanlagenkomponente entsprechend des Fähigkeitsverzeichnisses der Zugriffsindustrieanlagenkomponente zuzugreifen.

Zudem kann bei dem Industrieanlagensystem die Industrieanlagenverwaltungsvorrichtung ferner dazu eingerichtet sein, um eine Zugriffsberechtigungsinformationseingabe bezüglich der der Zugriffsschnittstelle für das Zugriffselement zugeordneten Zugriffsberechtigungsinformation zu empfangen.

Zudem kann bei dem Industrieanlagensystem die Industrieanlagenverwaltungsvorrichtung ferner dazu eingerichtet sein, um eine Zugriffsanforderung auf die Zugriffsindustrieanlagenkomponente durch das Zugriffselement über die Zugriffsschnittstelle zu empfangen, und auf die Zugriffsanforderung basierend auf der Zugriffsberechtigungsinformation zu antworten.

Zudem kann bei dem Industrieanlagensystem die Industrieanlagenverwaltungsvorrichtung ferner dazu eingerichtet sein, um eine Vielzahl von Zugriffsschnittstellen für eine Vielzahl von Zugriffselementen bereitzustellen. Dabei kann jeder der Vielzahl von Zugriffsschnittstellen eine Priorität zugeordnet sein. Ferner kann die Industrieanlagenverwaltungsvorrichtung dabei dazu eingerichtet sein, um konkurrierende Zugriffsanforderungen über mehrere der Vielzahl von Zugriffsschnittstellen entsprechend der jeweiligen Priorität zu berücksichtigen.

Zudem kann bei dem Industrieanlagensystem das Zugriffselement eines aus einer Cloudeinrichtung und einer Applikationseinrichtung sein.

Zudem können bei dem Industrieanlagensystem Kommunikationseinrichtungen des Industrieanlagensystems dazu eingerichtet sein, um mittels einem Open-Platform-Communications-Unified-Architecture-Protokoll (OPC UA) zu kommunizieren. OPC UA ist dabei ein industrielles Maschine-zu-Maschine-Protokoll.

In beispielhaften Ausführungsbeispielen können einige der Funktionalitäten des in Figur 1 und/oder 2 veranschaulichten Systems zwischen zwei (oder mehr) physikalisch getrennten Geräten aufgeteilt sein, die zusammen eine Betriebseinheit bilden können.

Entsprechend der oben dargestellten Abwandlungen des Systems kann gemäß beispielhaften Ausführungsbeispielen der vorliegenden Erfindung das in Figur 3 veranschaulichte Verfahren wie folgt abgewandelt sein.

Bei dem Verfahren kann jedes der Fähigkeitsverzeichnisse zumindest einen hinterlegten statischen Komponentenparameter der jeweiligen Industrieanlagenkomponente, der für eine Eigenschaft der jeweiligen Industrieanlagenkomponente steht, und/oder eine Komponentenbetriebswertspezifizierung zumindest eines durch die jeweilige Industrieanlagenkomponente zu erfassenden dynamischen Komponentenbetriebswerts der jeweiligen Industrieanlagenkomponente, der für einen Zustand der jeweiligen Industrieanlagenkomponente steht, und/oder zumindest eine Synthesemethode zur auf zumindest einem durch das Fähigkeitsverzeichnis spezifizierten dynamischen Komponentenbetriebswert basierend Generierung von Informationen für eine Ansteuerung und/oder Verwaltung der jeweiligen Industrieanlagenkomponente, und/oder zumindest eine Eingriffsmethode zum Eingriff in einen Betrieb der jeweiligen Industrieanlagenkomponente umfassen.

Bei dem Verfahren kann das Industrieanlagensystem ferner einen Server aufweisen. Dabei kann das Verfahren ferner ein Speichern, durch den Server, jeweils eines Schlüssels für jede aus der zumindest einen Industrieanlagenkomponente aufweisen. Dabei kann jeder der Schlüssel das Fähigkeitsverzeichnis der jeweiligen Industrieanlagenkomponente, das Identifizierungszeichen der jeweiligen Industrieanlagenkomponente, und eine Datenaustauschspezifizierung bezüglich mit der jeweiligen Industrieanlagenkomponente auszutauschenden Daten umfassen.

Das Verfahren kann ferner ein Speichern, durch den Server, von Registrierungsinformationen und mit den jeweiligen Registrierungsinformationen verknüpften Funktionsberechtigungen umfassen.

Das Verfahren kann ferner ein Speichern, durch den Server, eines Fähigkeitsgerüsts, aufweisen. Dabei kann das Fähigkeitsgerüst eine Vielzahl von Komponentenparameterspezifizierungen jeweils eines statischen Komponentenparameters, eine Vielzahl von Komponentenbetriebswertspezifizierungen jeweils eines dynamischen Komponentenbetriebswerts, eine Vielzahl von Synthesemethoden zur Generierung von Informationen, und eine Vielzahl von Eingriffsmethoden zum Eingriff in einen Betrieb einer Industrieanlagenkomponente aufweisen. Ferner kann dabei jedes aus der Vielzahl von Komponentenparameterspezifizierungen, der Vielzahl von Komponentenbetriebswertspezifizierungen, der Vielzahl von Synthesemethoden, und der Vielzahl von Eingriffsmethoden zumindest einem Industrieanlagenkomponententyp zugeordnet sein.

Das Verfahren kann ferner ein Erzeugen des Fähigkeitsverzeichnisses jedes der Schlüssel basierend auf dem Fähigkeitsgerüst und einem Industrieanlagenkomponententyp der jeweiligen Industrieanlagenkomponente aufweisen.

Das Verfahren kann ferner ein Erzeugen der Datenaustauschspezifizierung jedes der Schlüssel basierend auf dem Fähigkeitsverzeichnis des jeweiligen Schlüssels aufweisen.

Das Verfahren kann ferner ein Übertragen, durch den Server, einen der Schlüssel zu der Industrieanlagenverwaltungsvorrichtung, ein Empfangen, durch die Industrieanlagenverwaltungsvorrichtung, den einen der Schlüssel, und ein Extrahieren, durch die Industrieanlagenverwaltungsvorrichtung, des Fähigkeitsverzeichnisses der jeweiligen Industrieanlagenkomponente aus dem empfangenen Schlüssel, aufweisen.

Das Verfahren kann ferner ein Übertragen, durch die Industrieanlagenverwaltungsvorrichtung, um des empfangenen Schlüssels zu der Industrieanlagenkomponentenverwaltungsvorrichtung entsprechend der jeweiligen Industrieanlagenkomponente, ein Empfangen, durch die Industrieanlagenkomponentenverwaltungsvorrichtung, des Schlüssels, und ein Extrahieren, durch die Industrieanlagenkomponentenverwaltungsvorrichtung, des Fähigkeitsverzeichnisses der jeweiligen Industrieanlagenkomponente aus dem empfangenen Schlüssel, aufweisen.

Das Verfahren kann ferner ein Erkennen, durch die Industrieanlagenverwaltungsvorrichtung, eines Hinzufügens einer Industrieanlagenkomponente zu der Industrieanlage und des Identifizierungszeichens der hinzugefügten Industrieanlagenkomponente, und ein Anfordern, durch die Industrieanlagenverwaltungsvorrichtung, des Schlüssels bezüglich der hinzugefügten Industrieanlagenkomponente bei einem Server basierend auf dem Identifizierungszeichen der hinzugefügten Industrieanlagenkomponente, aufweisen.

Das Verfahren kann ferner ein Bereitstellen, durch die Industrieanlagenverwaltungsvorrichtung, einer Zugriffsschnittstelle für ein Zugriffselement, und ein Speichern, durch die Industrieanlagenverwaltungsvorrichtung, einer der Zugriffsschnittstelle für das Zugriffselement zugeordneten Zugriffsberechtigungsinformation, die darauf hinweist, ob das Zugriffselement berechtigt ist, über die Zugriffsschnittstelle auf einen statischen Komponentenparameter einer Zugriffsindustrieanlagenkomponente, und/oder einen dynamischen Komponentenbetriebswert der Zugriffsindustrieanlagenkomponente, und/oder eine Synthesemethode der Zugriffsindustrieanlagenkomponente, und/oder eine Eingriffsmethode der Zugriffsindustrieanlagenkomponente entsprechend des Fähigkeitsverzeichnisses der Zugriffsindustrieanlagenkomponente zuzugreifen, aufweisen.

Das Verfahren kann ferner ein Empfangen, bei der Industrieanlagenverwaltungsvorrichtung, einer Zugriffsberechtigungsinformationseingabe bezüglich der der Zugriffsschnittstelle für das Zugriffselement zugeordneten Zugriffsberechtigungsinformation, umfassen.

Das Verfahren kann ferner ein Empfangen, durch die Industrieanlagenverwaltungsvorrichtung, einer Zugriffsanforderung auf die Zugriffsindustrieanlagenkomponente durch das Zugriffselement über die Zugriffsschnittstelle, und ein Antworten, durch die Industrieanlagenverwaltungsvorrichtung, auf die Zugriffsanforderung basierend auf der Zugriffsberechtigungsinformation, aufweisen.

Das Verfahren kann ferner ein Bereitstellen, durch die Industrieanlagenverwaltungsvorrichtung, einer Vielzahl von Zugriffsschnittstellen für eine Vielzahl von Zugriffselementen, aufweisen. Dabei kann jeder der Vielzahl von Zugriffsschnittstellen eine Priorität zugeordnet sein. Dabei kann das Verfahren ferner ein Berücksichtigen, durch die Industrieanlagenverwaltungsvorrichtung, konkurrierender Zugriffsanforderungen über mehrere der Vielzahl von Zugriffsschnittstellen entsprechend der jeweiligen Priorität, aufweisen.

Bei dem Verfahren kann das Zugriffselement eines aus einer Cloudeinrichtung und einer Applikationseinrichtung sein.

Das Verfahren kann ferner ein Kommunizieren, durch Kommunikationseinrichtungen des Industrieanlagensystems, mittels einem Open-Platform-Communications-Unified-Architecture-Protokoll, aufweisen.

Aspekte der vorliegenden Erfindung werden nachstehend detaillierter beschrieben.

Allgemein wird mit der vorliegenden Anmeldung ein umfassender Ansatz verfolgt, eine Smart Factory in all ihren Aspekten abzubilden, um eine geeignete Einflussnahme zu ermöglichen.

Dabei soll die Digitalisierung und Vernetzung insbesondere kleinerer und mittlerer Unternehmen unterstützt werden, wobei auf bestehenden Standards und Leitfäden für Industrie 4.0 aufgebaut werden soll, und eine konkrete, robuste Umsetzung geboten werden soll, die konsequent auf den Anforderungen des Mittelstands ausgerichtet ist.

Um dazu sowohl schnell greifbare Mehrwerte, wie z.B. Datentransparenz in der Produktion, zu erreichen, als auch die Möglichkeit für (spätere) Erweiterungen durch Cloud-Services zu ermöglichen, verknüpft der erfindungsgemäße Ansatz die Kommunikation von Industrie-4.0-Produkten innerhalb des Unternehmens als auch die geprüfte und gesicherte Verbindung zu Clouds (beispielsweise Drittanbieter-Clouds). Industrie-4.0-Produkte können dabei Anlagen (z.B. Plasmaschneidanlagen), Vorrichtungen (z.B. Handling- und Transportsysteme) oder eigenständige Komponenten (z.B. Pumpen) sein. Industrie-4.0-Produkte werden durch eine Verwaltungsschale eingebunden, die durch die erfindungsgemäße Industrieanlagenkomponentenverwaltungsvorrichtung und ein deren Funktionalitäten wiedergebendes entsprechendes Verfahren zur Ansteuerung und Verwaltung von Komponenten einer Industrieanlage bereitgestellt wird.

Eine Industrieanlage kann dabei die Maschinen, Anlagen und Vorrichtungen in einer Produktion sowie alle umgebenden Komponenten bis hin zum Fabrikgebäude (Technische Gebäudeausrüstung, TGA) umfassen, welche sich in Verbindung, in Abhängigkeit oder im Einfluss mit der Produktion befinden. Dies betrifft ebenfalls Komponenten zum Management von internen und externen Arbeitskräften (z.B. Zugangsrechte, Authentifizierung, Wartungsbestätigungen). Auch nicht-physische Komponenten können dabei Teil der Industrieanlage sein.

Die Industrie-4.0-Produkte selbst können wiederum Subsysteme (ebenfalls Industrie-4.0-Produkte) enthalten, die wieder eine erfindungsgemäße Verwaltungsschale besitzen.

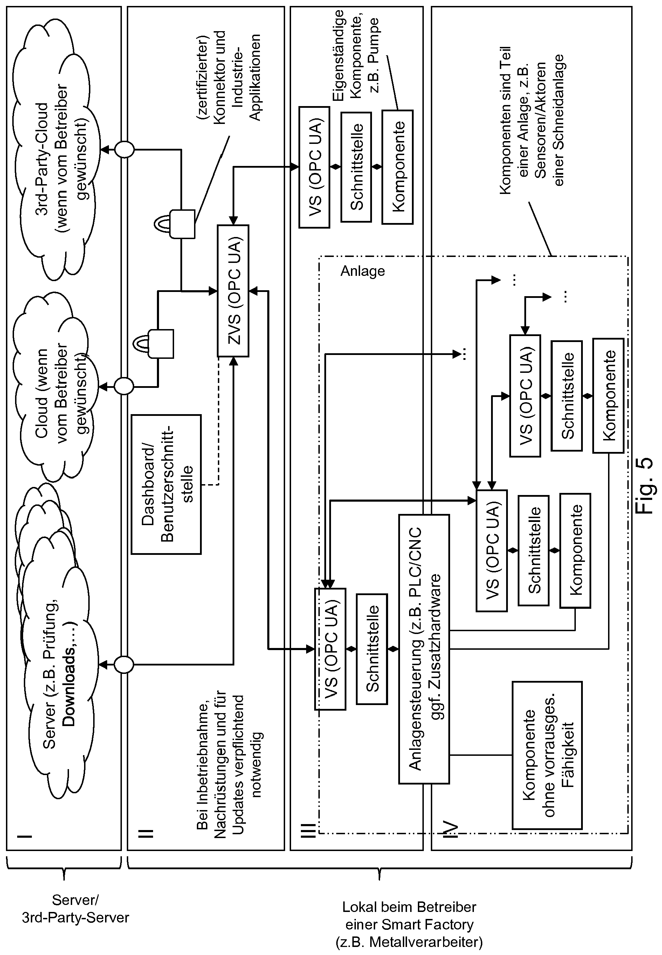

Gemäß dem erfindungsgemäßen Konzept kann das Industrieanlagensystem in vier Ebenen gegliedert werden, wie in Figur 5 schematisch dargestellt ist.

Eine erste Ebene bildet mit dem Systemkern verbundene Server und Clouds ab.

Eine zweite Ebene bildet eine Zentrale Verwaltungsschale ab, die der Smart Factory übergeordnet ist und damit einen Teil des Industrieanlagensystems bildet.

Eine dritte Ebene bildet eine Verwaltungsschale ab und befindet sich somit auf der Ebene von Anlagen/Vorrichtungen/Komponenten, wobei die Verwaltungsschale diesen übergeordnet ist.

Eine vierte Ebene bildet eine Verwaltungsschale auf Subsystemebene ab, also auf der Ebene von Subkomponenten der vorgenannten Anlagen/Vorrichtungen/Komponenten (wobei die Verwaltungsschale diesen übergeordnet ist). Die vierte Ebene kann also beispielsweise Komponenten in einer Anlage entsprechen.

Die Verwaltungsschale (Industrieanlagenkomponentenverwaltungsvorrichtung 12) bildet die dritte Ebene des erfindungsgemäßen Konzepts ab. Diese Verwaltungsschale auf Systemebene - d.h. Anlagen, Vorrichtungen und eigenständige Komponenten einer Smart Factory - stellt deren digitales Abbild dar und tauscht mit einer Zentralen Verwaltungsschale (Industrieanlagenverwaltungsvorrichtung 13) die relevanten Informationen, entsprechend des Fähigkeitsverzeichnisses (auch Methodenliste genannt), aus. Auf der anderen Seite stellt die Verwaltungsschale die Schnittstelle zum realen System (Asset, Industrieanlagenkomponente 11) dar und tauscht die Daten, z.B. mit der CNC oder PLC-Steuerung, über eine Schnittstelle aus, die über einen Schnittstellenspeicher verfügen kann. Nach einem Implementierungsprozess des jeweiligen Systems wird die entsprechende Verwaltungsschale erzeugt d.h., beispielsweise wird die erfindungsgemäße Vorrichtung 12 erzeugt. Dies beinhaltet beispielsweise eine Installation bzw. Einrichtung der erfindungsgemäßen Funktionalitäten direkt auf der Steuerung einer Komponente selbst. Dies beinhaltet ferner beispielsweise eine Installation bzw. Einrichtung der erfindungsgemäßen Funktionalitäten bei einer zusätzlich zu der Steuerung der Komponente vorzusehenden Hardware. Die erfindungsgemäße Vorrichtung 12 bzw. die erfindungsgemäßen Funktionalitäten können also einen Teil der Steuerung der Komponente (mit dieser integriert) oder einen Teil der zusätzlichen Hardware darstellen. Die Kommunikation wird beispielsweise auf Basis von OPC-UA realisiert. Die Assets sowie die Verwaltungsschalen besitzen eine eindeutige Identifizierung.

Die Zentrale Verwaltungsschale, die durch die erfindungsgemäße Industrieanlagenverwaltungsvorrichtung und ein deren Funktionalitäten wiedergebendes entsprechendes Verfahren zur Ansteuerung und Verwaltung einer Industrieanlage bereitgestellt wird, bildet die zweite Ebene des erfindungsgemäßen Konzepts bzw. Ansatzes ab und stellt das Kernstück einer sogenannten Smart Factory gemäß dem erfindungsgemäßen Konzept dar, welches die Interoperabilität der Industrie-4.0-Produkte gewährleistet, Applikationen und ggf. Cloud-Services anbindet und eine Visualisierung aller relevanten Informationen und Einstellungen für den Betreiber ermöglicht.

Diese Zentrale Verwaltungsschale repräsentiert übergeordnet eine im Industrie-4.0-Kontext bekannte Smart Factory und dient zudem als Gateway zu dem System zugeordneten Servern und externen Cloud-Servern. Die Zentrale Verwaltungsschale ist lokal beim Betreiber einer Smart Factory installiert bzw. vorgesehen, wodurch der Betreiber die gesamte Kontrolle über seine Daten (bzw. die durch die Smart Factory bzw. durch die Industrieanlage anfallenden Daten) behält.

Die Zentrale Verwaltungsschale ist eindeutig identifizierbar. Die Zentrale Verwaltungsschale ist dabei an die Hardware, auf der sie installiert ist, auch über diese Identifizierbarkeit gekoppelt.

Die Zentrale Verwaltungsschale beinhaltet beispielsweise einen OPC-UA-Server und realisiert die Kommunikation sowohl zu einem dem System zugeordneten Server wie auch zu (untergeordneten) Verwaltungsschalen bevorzugt auf Basis von OPC-UA. Dabei kann die Übertragung beispielsweise über eine (gesicherte) Intranet/Internetverbindung, drahtlos, oder über standardisierte industrielle Netzwerkverbindungen erfolgen.

Die Zentrale Verwaltungsschale bietet neben oder im Rahmen der Ansteuerung und Verwaltung einer Industrieanlage zahlreiche grundlegende Funktionalitäten, die beispielsweise als Module ausgeführt sein können, um Systeme in der Smart Factory bzw. der Industrieanlage zu verwalten, zu koordinieren und zu überwachen.

Unter Anderem stellt die Zentrale Verwaltungsschale eine Schnittstelle zu Benutzern (z.B. Betreiber, Bediener) bereit. Die Schnittstelle kann Funktionalitäten der Zentralen Verwaltungsschale und/oder der Industrieanlage oder von Komponenten der Industrieanlage darstellen, und zudem eine Interaktion ermöglichen.

Gemäß bevorzugten Ausführungsbeispielen kann die erfindungsgemäße Zentrale Verwaltungsschale die Daten der Systeme anzeigen, diese jedoch nicht direkt ansteuern, sondern stattdessen Empfehlungen bzw. direkte Anweisungen abgeben. Die Empfehlungen bzw. direkten Anweisungen zur Ansteuerung können durch zusätzliche Applikationen (beispielsweise durch Hersteller entsprechender Industrieanlagenkomponenten bereitgestellt) erfolgen. Die tatsächliche Ansteuerung der Systeme erfolgt hingegen durch den jeweiligen Industrieanlagenkomponenten zugeordneten Steuerungen der Hersteller. Hierdurch ist gewährleistet, dass das erfindungsgemäße Konzept bzw. Umsetzende des erfindungsgemäßen Konzepts (z.B. Hersteller bzw. Bereitsteller der erfindungsgemäßen Vorrichtung oder des erfindungsgemäßen Verfahrens zur Ansteuerung und Verwaltung einer Industrieanlage) nicht für eine ggf. fehlerhafte Ansteuerung haftbar gemacht werden können, da nur die Verbindung zur Verfügung gestellt wird. Die Verantwortung der Ansteuerung kann hingegen Applikationsanbietern bzw. Herstellern zugesprochen werden.

Darüber hinaus stellt die erfindungsgemäße Zentrale Verwaltungsschale allgemein Funktionalitäten bereit, die sichere Identitäten gewährleisten (beispielsweise mittels Authentifizierung), die eine sichere Kommunikation gewährleisten (was insbesondere die Datensicherheit und -fehlerfreiheit beinhaltet), die einen sicheren Informationszugang gewährleisten (beispielsweise mittels Autorisierung), und die eine Datenaufzeichnung (Prüfung) sicherstellen.

Die erste Ebene des erfindungsgemäßen Konzepts is heterogen aufgebaut und umfasst eine Vielzahl möglicher Elemente. Diese sind an Grenzen des erfindungsgemäßen Systems angeordnet und mit dem Kern des Systems verbunden.

Nachfolgend werden Beispiele von Elementen der ersten Ebene diskutiert.

Cloud-Dienste stellen auf der einen Seite einen integralen Bestandteil von vielen Industrie-4.0-Lösungen dar, wecken aber auf der anderen Seite bei vielen Unternehmen Vorbehalte bzgl. Sicherheit, Daten- und Knowhow-Schutz. Das erfindungsgemäße Konzept legt besonderen Wert darauf, diesen Vorbehalten auf mehreren Wegen zu begegnen. Zum einen kann eine Registrierung der Personen und Firmen sowie der Produkte (Assets) für die notwendige Sicherheit und Konformität zu der vorgegebenen Datenstruktur sorgen, zum anderen kann die Nutzung von Cloud-Diensten optional gestaltet sein. Gemäß beispielhaften Ausführungsbeispielen der Erfindung erfährt der Betreiber vor der Nutzung transparent, welche Informationen für den jeweiligen Cloud-Dienst übermittelt werden würden. Dementsprechend befinden sich auf der ersten Ebene verschiedene Kategorien von Clouds bzw. Cloud-Diensten bzw. cloud-dienst-ähnlichen Diensten und Infrastrukturen, welche im Folgenden beschrieben sind.

Zunächst wird erfindungsgemäß ein dem Industrieanlagensystem zugeordneter, übergeordneter Server auf der ersten Ebene bereitgestellt. Hauptfunktionen dieses Servers sind Registrierungen, Produktimplementierung und Downloads. Eine Verbindung zu diesem Server ist (zumindest zeitweise) obligatorisch.

Um Vorteile des erfindungsgemäßen Konzepts zu nutzen und die geforderte Sicherheit zu gewährleisten, kann in einem ersten Schritt eine obligatorische Registrierung bei dem (Registrierungs-)Server sowohl durch Hersteller als auch durch Betreiber durchgeführt werden.

Hersteller von Anlagen, Vorrichtungen und Komponenten müssen eine Konformität mit Vorgaben gemäß dem erfindungsgemäßen Konzept sicherstellen.

Erfindungsgemäß wird ein Implementierungsverfahren bezüglich jeweiliger Anlagen, Vorrichtungen und Komponenten durchgeführt, welches einen Schlüssel (mit einer entsprechenden Methodenliste (Fähigkeitsverzeichnis)) zur Nutzung des jeweiligen Systems zum Ergebnis hat und die geforderte eindeutige Identifizierung gewährleistet.

Die erzeugten Schlüssel werden nicht nur in der jeweiligen Anlage/Vorrichtung/Komponente hinterlegt sondern auch auf einem dem System übergeordneten (Prüfungs-)Server.

Der Prüfungs-Server kann in Einheit mit dem Registrierungs-Server bereitgestellt sein. Altenativ können der Prüfungs-Server und der Registrierungs-Server durch getrennte Server verkörpert sein.

Bei der Inbetriebnahme/Nachrüstung eines Industrieanlagensystems bzw. einer Industrieanlagenkomponente des Industrieanlagensystems bei einem Betreiber ist eine obligatorische Verbindung mit dem genannten (Prüfungs-)Server nötig, um installierte Systeme zu überprüfen und so Missbrauch zu verhindern. Bevorzugt wird diese Verbindung durch die Zentrale Verwaltungsschale bereitgestellt. Für die Verifizierung wird insbesondere der Schlüssel herangezogen. Anhand der identifizierten Anlagen/Vorrichtungen/Komponenten lädt die Zentrale Verwaltungsschale bei der Inbetriebnahme die relevanten Methodenlisten (Fähigkeitsverzeichnisse) von dem Server herunter.

Erfindungsgemäß kann die Verbindung zu dem Server beendet werden, sobald die vorstehend dargelegten mit der Einrichtung von Anlagen/Vorrichtungen/Komponenten verbundenen Schritte durchgeführt sind. Die Verbindung kann jedoch erfindungsgemäß erneut aufgebaut werden, wenn eine erneute Identifizierung und/oder Einrichtung notwendig wird, beispielsweise bei Installation zusätzlicher Anlagen/Vorrichtungen/Komponenten in der erfindungsgemäßen Smart Factory (Industrieanlagensystem).

Ferner können erfindungsgemäß weiterer optionale Cloud-Server in der ersten Ebene bereitgestellt werden.

Diese können einerseits zum erfindungsgemäßen Konzept zugehörige Cloud-Server und andererseits Cloud-Server Dritter umfassen.

Zusätzlich zu den beschriebenen obligatorischen Servern bietet das erfindungsgemäße Konzept also weitere Dienste, welche optional genutzt werden können. Beispielsweise erhalten in einem Informationsportal Nutzer detaillierte Informationen, Unterlagen und Anweisungen zum Implementieren der Technologie sowie in einem Downloadbereich Softwareapplikationen und Werkzeuge für Implementierer und Entwickler.

Ferner können weitere Applikationen heruntergeladen werden. Diese Applikationen können sowohl lokal als auch cloud-basiert sein, wobei die jeweilig referenzierte Cloud einerseits durch zum erfindungsgemäßen Konzept zugehörige Cloud-Server und andererseits durch Cloud-Server Dritter bereitgestellt sein können.

Registrierte Drittanbieter können also Kunden optionale eigene Cloud-Lösungen anbieten, z.B. optimiertes Wartungsmanagement oder Produktionsmanagement. Zudem können die Hersteller, z.B. Komponentenhersteller, mit Zustimmung des Betreibers Informationen über ihre Produkte sammeln, um z.B. die Entwicklung neuer Versionen zu verbessern.

Die Verbindung der Zentralen Verwaltungsschale zu diesen Clouds erfolgt erfindungsgemäß über Applikationen und Konnektoren.

Bei dem erfindungsgemäßen Konzept werden die Daten von verschiedenen Anlagen/Vorrichtungen/Komponenten konzentriert. Im Sinne von Industrie 4.0 und einer Smart Business World wird jedoch die Vernetzung verschiedener Datenbereiche angestrebt. Diese beinhalten unter anderem Maschinendaten (beispielsweise Anlagen/Vorrichtungen/Komponenten, aber auch Daten bezüglich Gebäudesteuerung), Personaldaten (z.B. Anlagenbediener, Bestätigung von Servicetechnikern, Bestätigung von Reinigungspersonal), und Werkstückdaten (z.B. via RFID-Tags).

Hierbei berücksichtigt das erfindungsgemäße Konzept, wie sich durch entsprechende Informationen am gezieltesten Mehrwerte erzielen lassen, statt alle möglichen Daten unkoordiniert aufzunehmen und z.B. an eine Cloud zu senden. Insbesondere werden dabei die folgenden Mehrwertfelder adressiert: Arbeits- und Ressourcenmanagement, Energieeffizienz, Maintenance, Qualitätssicherung, Arbeitssicherheit, und Supply Chain. Diese Mehrwertfelder sind jedoch nur beispielhaft genannt und schränken die Erfindung in keiner Weise ein. Insbesondere sind weitere Felder wie beispielsweise fertigungsbezogene Erkenntnisse umfasst, die sich auch noch durch zukünftige Entwicklungen ergeben können.

Detailliert betrifft vorliegende Erfindung ein System zum Betrieb einer Smart Factory, bei dem Anlagen, Vorrichtungen und Komponenten verschiedener Hersteller durch Abgleich eines Schlüssels auf einem Cloud-Server eindeutig identifiziert und diese eingebunden werden. Das System ermöglicht, dass die Anlagen, Vorrichtungen und Komponenten standardisiert und mit einem hohen Maß an Sicherheit Informationen austauschen können, welche intern oder über Schnittstellen extern weiterverarbeitet werden können, um eine intelligente Steuerung der Smart Factory beispielsweise unter Berücksichtigung der Haftungsfrage zu gewährleisten.

Wie vorstehend vorgestellt kann das Industrieanlagensystem folgende Elemente umfassen.

Das Industrieanlagensystem kann eine Schnittstelle zwischen einem Asset (Industrieanlagenkomponente) und der zugeordneten Verwaltungsschale (Industrieanlagenkomponentenverwaltungsvorrichtung) aufweisen. Die Schnittstelle stellt eine neutrale Schnittstelle zwischen der Steuerung (z.B. CNC/PLC) des Assets (Anlage/Vorrichtung/Komponente) und der Verwaltungsschale dar. In ihren beiden getrennten Bereichen (ausgebildet durch separate Speicherbereiche einer Speichereinrichtung, wobei die Speichereinrichtung eine physikalisch zusammengehörige Speichereinheit sein kann, oder aus zwei oder mehr voneinander getrennten Speichereinheiten ausgebildet sein kann) kann jeweils nur das Asset bzw. die Verwaltungsschale schreiben und im jeweils anderen Bereich die Daten nur lesen. Dadurch kann insbesondere die Haftungsfrage beim Eingriff in die Steuerung des Assets eindeutig geregelt sein.

Das Industrieanlagensystem kann ferner eine Verwaltungsschale (Industrieanlagenkomponentenverwaltungsvorrichtung) aufweisen. Die Verwaltungsschale stellt eine digitale Repräsentation des Assets in der Smart Factory dar. Die Verwaltungsschale nutzt erfindungsgemäß die aus vorstehend genannten Schnittstelle (Asset/Verwaltungsschale) erhaltenen Daten des Assets, um diese anhand einer entsprechenden Methodenliste (Fähigkeitsverzeichnis) mit den dort hinterlegten Methoden, Daten und Parametern in relevante Informationen weiterzuverarbeiten. Durch das beispielsweise auf OPC UA basierende Kommunikationsmodul kann die Verwaltungsschale diese Informationen in der Smart Factory austauschen. Die im Maschinen- und Anlagenbau übliche Verschachtelung, d.h., die Verwendung von Subsystemen, z.B. Module oder Komponenten in einem Gesamtsystem, kann durch eine Verschachtelung der Verwaltungsschalen ebenfalls abgebildet werden.

Das Industrieanlagensystem kann ferner Methodenlisten (Fähigkeitsverzeichnisse) verwenden. Ein zentrales Element des erfindungsgemäßen Konzepts stellt die Methodenliste dar, bei der spezifisch für jedes Asset (bzw. dessen Verwaltungsschale) definiert ist, welche Informationen für dieses Asset in der Smart Factory zur Verfügung stehen und ausgetauscht werden können. Die jeweilige spezifische Methodenliste wird in einem nachstehend näher beschriebenen Verfahren zur Implementierung erstellt. Durch hinterlegte Methoden werden die Parameter, die statischen und die dynamischen Daten eines Assets zu Informationen verarbeitet. Diese Informationen können in der Smart Factory genutzt werden und bilden somit die Basis zur Gewährleistung der Interoperabilität. Basierend auf der im Verfahren zur Implementierung erstellten Methodenlisten wird auch die spezifische Schnittstelle (Asset/Verwaltungsschale), welche die benötigten Daten mit der Steuerung des Assets austauscht, generiert. Zudem wird ein Schlüssel, der die Methodenliste und die Schnittstelle (Asset/Verwaltungsschale) enthält, auf dem vorstehend genannten übergeordneten Server hinterlegt. Wenn eine Verwaltungsschale an eine Zentrale Verwaltungsschale angeschlossen wird, wird auf der Seite der Zentralen Verwaltungsschale ein digitales Abbild der Methodenliste und der Schnittstelle (Asset/Verwaltungsschale) vom Server heruntergeladen und hinterlegt, um den gesicherten Datenaustausch mit der Verwaltungsschale zu gewährleisten.

Die Fähigkeitsverzeichnisse (Methodenlisten) gemäß beispielhaften Ausführungsbeispielen der vorliegenden Erfindung dienen dazu, die (standardisierten) Daten, welche die Anlagen/Vorrichtungen/Komponenten über die Schnittstelle (den Schnittstellenspeicher) an die Verwaltungsschale liefern, durch spezifische Methoden zu validieren und daraus Informationen, die für die Interoperabilität, den sicheren und robusten Datenaustausch und die Mehrwertfelder relevant sind, zu schaffen.

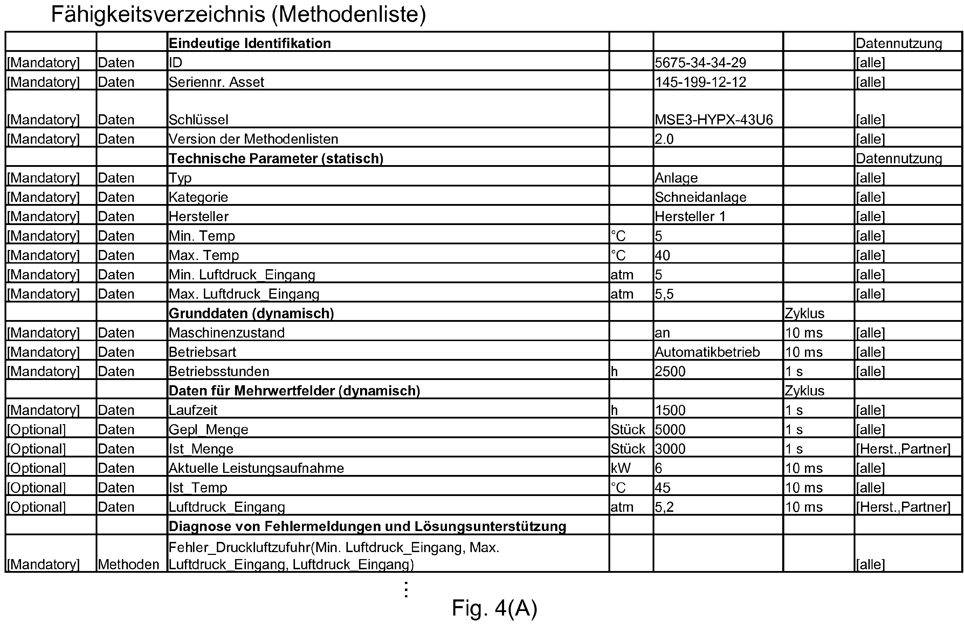

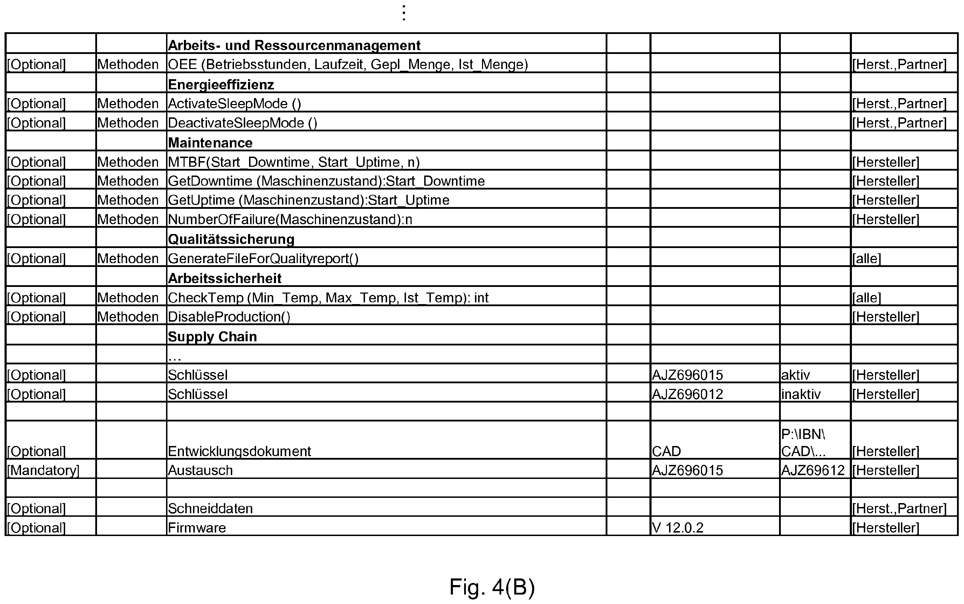

Figur 4 ist ein schematisches Diagramm, das ein Fähigkeitsverzeichnis gemäß beispielhafter Ausführungsbeispiele der vorliegenden Erfindung veranschaulicht.

Die in Figur 4 veranschaulichte Methodenliste stellt dabei lediglich ein Beispiel einer möglichen Methodenliste (Fähigkeitsverzeichnis) dar, das dem Verständnis der vorliegenden Erfindung dient. Erfindungsgemäße Fähigkeitsverzeichnisse sind weder auf die angegebenen einzelnen Felder noch auf die jeweiligen Feldinhalte beschränkt. Insbesondere kann eine tatsächliche Implementierung mehr oder weniger Felder als gezeigt sowie von den gezeigten Felder abweichende Felder aufweisen.

Gemäß Figur 4 kann die Methodenliste die Bereiche "Eindeutige Identifikation", "Technische Parameter (statisch)", "Grunddaten (dynamisch)", "Daten für Mehrwertfelder (dynamisch, mit definierter Zykluszeit)", "Methoden (Fehlermeldungen, Arbeits- und Ressourcenmanagement, Energieeffizienz, Maintenance, Qualitätssicherung, Arbeitssicherheit, Supply Chain)", "Verweis auf Subsysteme", "Lebenszyklusdaten (z.B. Entwicklungsdaten, Austausch)", und/oder "Technologie- und Servicedaten (spezifische Daten für den direkten Austausch zwischen Assets)" umfassen.

Die Technischen Parameter sind dabei ein Beispiel der Komponentenparameter.

Die Grunddaten und die Daten für Mehrwertfelder sind dabei Beispiele für die dynamischen Komponentenbetriebswerte.

Die Methoden sind dabei Beispiele für die Synthesemethoden.

Wie in Figur 4 dargestellt, umfasst der Bereich "Eindeutige Identifikation" beispielsweise die Felder ID, Seriennummer des Assets, Schlüssel, und Version der Methodenlisten/Fähigkeitsverzeichnisse.

Ferner umfasst der Bereich "Technische Parameter" beispielsweise die Felder Typ, Kategorie, Hersteller, Minimaltemperatur, Maximaltemperatur, Minimalluftdruck am Eingang, und Maximalluftdruck am Eingang.

Ferner umfasst der Bereich "Grunddaten" beispielsweise die Felder Maschinenzustand, Betriebsart, Betriebsstunden.

Ferner umfasst der Bereich "Daten für Mehrwertfelder" beispielsweise die Felder Laufzeit, Geplante Menge, ist-Menge, Aktuelle Leistungsaufnahme, Ist-Temperatur, und Luftdruck am Eingang.

Ferner umfasst der Bereich "Methoden" beispielsweise die Felder bzw. beispielhaften Synthesemethoden "Fehler_Druckluftzufuhr(Min. Luftdruck_Eingang, Max. Luftdruck_Eingang, Luftdruck_Eingang)", "OEE (Betriebsstunden, Laufzeit, Gepl_Menge, Ist_Menge)", "ActivateSleepMode ()", "DeactivateSleepMode ()", "MTBF(Start_Downtime, Start_Uptime, n)", "GetDowntime (Maschinenzustand):Start_Downtime", "GetUptime (Maschinenzustand): Start_Uptime", "NumberOfFailure(Maschinenzustand):n", "GenerateFileForQualityreport()", und "CheckTemp (Min_Temp, Max_Temp, Ist_Temp): int", "DisableProduction()", und somit Methoden zur Bestimmung von angereicherten Informationen (z.B. "Fehler_Druckluftzufuhr(Min. Luftdruck_Eingang, Max. Luftdruck_Eingang, Luftdruck_Eingang)") und auch Methoden zum Eingriff in das entsprechende Asset/Industrieanlagenkomponente (z.B. "ActivateSleepMode ()").

Die Synthesemethoden können ferner die Identifikation sowohl eines Ursprungs einer Abfrage als auch der Industrieanlagenkomponente umfassen. Ferner können die Synthesemethoden die Verifizierung von Daten, Werten, Parametern, und Informationen umfassen.

Jedem der oben genannten Felder können Informationen bezüglich einer Zugriffs- bzw. Nutzungsberechtigung zugefügt sein. Dies ermöglich eine Kontrolle darüber, wer bzw. was (z.B. Abrufquellen 87) auf Daten zugreifen, diese empfangen, und/oder in den Betriebsablauf der Industrieanlagenkomponente eingreifen darf.

Dabei können die Berechtigungsinformationen in verschiedenen Granulierungen vorliegen, beispielsweise auf einer groben Ebene der Hersteller von Komponenten/Applikationen oder auf einer sehr feinen Ebene einzeln identifizierter Komponenten.

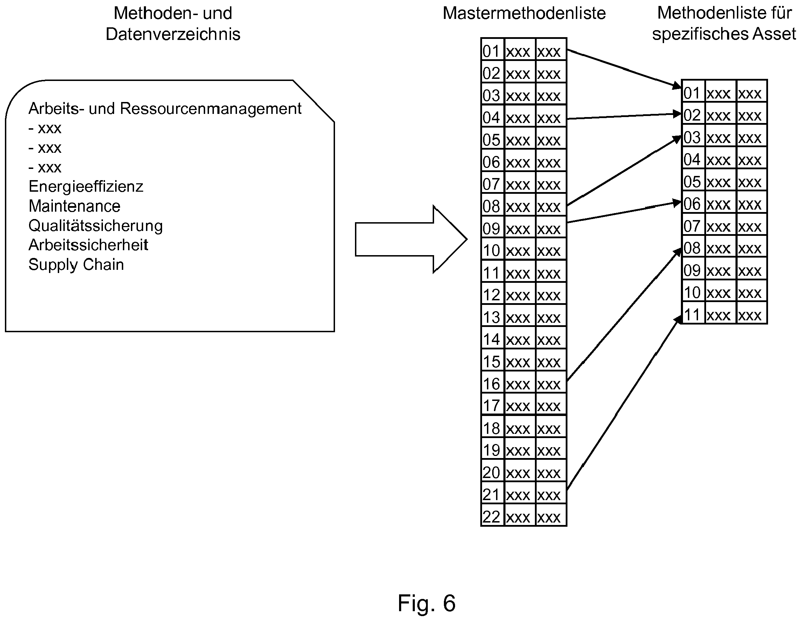

Als Basis für die Erstellung einer spezifischen Methodenliste (Fähigkeitsverzeichnis) dient ein Methoden- und Datenverzeichnis, das in Figur 6 dargestellt ist. In diesem Verzeichnis wird die "Sprache" bzw. Terminologie definiert, die später verwendet werden kann, um die Interoperabilität zwischen verschiedenen Anlagen/Vorrichtungen/Komponenten unterschiedlicher Hersteller zu gewährleisten. In dem Verzeichnis werden alle Daten, Formate, Methoden, Formeln, Parameter, Kriterien etc. beispielsweise auf Basis bestehender Normen und Vorschriften aus den verschiedenen Bereichen (ggf. ergänzt durch Experteneinschätzungen) hinterlegt. Zusätzlich werden ergänzende Informationen, z.B. Definitionen oder Beschreibungen hinterlegt.

Auf Basis des Verzeichnisses wird eine Mastermethodenliste (entsprechend einem Fähigkeitsgerüst) generiert, die alle theoretisch möglichen Daten für ein Asset enthält. Wenn nun eine Methodenliste für ein spezifisches Asset im nachstehend beschriebenen Implementierungsprozess erstellt wird, werden nur die relevanten Daten aus der Mastermethodenliste (entsprechend einem Fähigkeitsgerüst) abgebildet. Die relevanten Daten hängen beispielsweisen von einer Auswahl im Implementierungsprozess ab, z.B. Anlage/Vorrichtung/Komponente, Herstellerkategorie, gewünschte freiwillige Daten.

Das Industrieanlagensystem kann ferner eine Zentrale Verwaltungsschale aufweisen. Die Zentrale Verwaltungsschale stellt eine übergeordnete Repräsentation einer Smart Factory dar. Im Vergleich zu einer Verwaltungsschale bildet sie somit keine Anlage, Vorrichtung oder Komponente ab, sondern ist dafür verantwortlich, die verschiedenen Assets in der Smart Factory eindeutig zu identifizieren, mit den Assets sicher und standardisiert zu kommunizieren, deren gesendeten Informationen zu strukturieren und diese mit den Modulen der Zentralen Verwaltungsschale, Applikationen sowie Cloud-Diensten auszutauschen. Die Module der Zentralen Verwaltungsschale beinhalten grundlegende Funktionalitäten für den Betrieb und die Überwachung einer Smart Factory sowie beispielsweise eine Visualisierung relevanter Informationen zur Schaffung von Transparenz für den Betreiber.

Das Industrieanlagensystem kann ferner eine Schnittstelle (Konnektor zwischen der Zentrale Verwaltungsschalen und Applikationen, Clouds, Cloud-Diensten und Servern) aufweisen. Applikationen können Systeme auf höherliegenden Unternehmensebenen sein (z.B. ERP-, PPS- und MES-Systeme (EPR: Enterprise-Resource-Planning, PPS: Produktionsplanung und -steuerung, MES: Manufacturing Execution System, Produktionsleitsystem)) oder (hersteller-)spezifische Funktionalitäten bieten. Der Konnektor (Schnittstelle) regelt dabei nach Zustimmung des Betreibers der Smart Factory, welche Daten ausgetauscht werden dürfen. Applikationen und Cloud-Dienste haben spezifische Funktionalitäten, um die Informationen der verschiedenen Assets einer Smart Factory zu nutzen. Wenn die Applikationen oder Cloud-Dienste Handlungsempfehlungen bzw. konkrete Anweisungen an die Assets geben wollen, müssen diese in mit dem erfindungsgemäßen Konzept konformer Form durch den Konnektor übergeben werden.

Das heißt, es wird eindeutig und transparent geregelt, welche Informationen von der erfindungsgemäßen Zentralen Verwaltungsschale in strukturierter Form weitergegeben werden.

Wenn der Betreiber einer Smart Factory eine spezifische Applikation oder einen Cloud-Dienst in Anspruch nehmen will, muss er dem Datentransfer zustimmen, bevor er die entsprechenden Dienste nutzen kann. Dabei wird ihm durch die vorstehend genannte Schnittstelle (Konnektor) transparent dargelegt, welche Informationen von der erfindungsgemäßen Zentralen Verwaltungsschale für den Austausch zur Verfügung gestellt werden sollen. Der Betreiber kann daraufhin bestimmen, ob bzw. welche Informationen durch die jeweilige Applikation genutzt werden dürfen.

Über einen entsprechenden Konnektor können die Applikationen auf Informationen und Methoden zugreifen, die von den angeschlossenen Industrieanlagenkomponenten bzw. diesen zugeordneten Verwaltungsentitäten zur Verfügung gestellt werden, und die für die Art von Applikation zugelassen sind.

Gemäß beispielhaften Ausführungsbeispielen der vorliegenden Erfindung kann in der Methodenliste (Fähigkeitsverzeichnis) festgelegt sein, welche Informationen von wem genutzt werden dürfen. Obligatorische Daten sind dabei grundsätzlich für alle Applikationen offen. Bei den optionalen Daten kann der Hersteller festlegen, ob nur Applikationen von dem jeweiligen Hersteller oder auch Applikationen zugelassener Partner oder alle Applikationen darauf zugreifen dürfen.

Gemäß beispielhaften Ausführungsbeispielen der vorliegenden Erfindung kann auch im Konnektor festgelegt sein (beispielsweise durch den Entwickler einer Applikation), welche Informationen/Methoden von welchen Arten von Industrieanlagenkomponenten zugeordneten Industrieanlagenkomponentenverwaltungsvorrichtungen für eine spezifische Applikation benötigt werden. Beispielsweise könnte für eine Energieeffizienz-Applikation festgelegt sein, dass von allen an die erfindungsgemäße Zentrale Verwaltungsschale angeschlossenen Industrieanlagenkomponenten zugeordneten Industrieanlagenkomponentenverwaltungsvorrichtungen den aktuellen Energieverbrauch benötigt.

Zudem besitzt gemäß beispielhaften Ausführungsbeispielen der vorliegenden Erfindung eine Applikation selbst ebenfalls bestimmte Parameter wie z.B. Anbieter der Applikation, Typ der Applikation, ID. Somit kann der Konnektor (vorstehend genannte Schnittstelle) prüfen, ob die von der Applikation angeforderten Informationen auch für die entsprechende Applikation durch den Hersteller einer einer Industrieanlagenkomponente zugeordneten Industrieanlagenkomponentenverwaltungsvorrichtung freigegeben sind.

Nachdem überprüft und festgelegt wurde, welche Informationen/Methoden der Applikation zur Verfügung gestellt werden, kann diese die Informationen durch applikationsspezifische Funktionen weiterverarbeiten (durch welche Funktionen die Applikation die Informationen weiterverarbeitet, wird dabei gemäß dem erfindungsgemäßen Konzept nicht eingeschränkt). Dies kann entweder lokal geschehen oder aber in Zusammenspiel mit einem Cloud-Dienst.

In diesem Fall wird ein cloud-bezogener Konnektor (vorstehend genannte Schnittstelle) von der Applikation genutzt, um eine sichere Verbindung zu einem Cloud-Server (z.B. des Applikations-Anbieters) herzustellen und eine entsprechende Authentifizierung der Applikation durchzuführen.

Der cloud-bezogene Konnektor und der applikations-bezogene Konnektor können durch einen gemeinsamen Konnektor (vorstehend genannte Schnittstelle) umfasst sein.

Gemäß dem erfindungsgemäßen Konzept wird dabei nicht eingeschränkt, welche Funktionen durch die Applikation lokal und welche in der Cloud ausgeführt werden. Dies kann z.B. der Fall sein, um komplexere Berechnungen auf leistungsstarken Cloud-Servern durchzuführen oder den Hersteller in bestimmten Situationen (z.B. anstehende Wartung) zu informieren.

Neben der Nutzung der zugelassenen Informationen/Methoden durch die Applikation kann diese wiederum Informationen an die erfindungsgemäße Zentrale Verwaltungsschale zurückliefern, welche Aktionen durch die jeweiligen Industrieanlagenkomponenten zugeordneten Industrieanlagenkomponentenverwaltungsvorrichtungen ausgeführt werden sollen. Beispielsweise kann eine Energiemanagement-Applikation eine Empfehlung bzw. eine konkrete Anweisung zum Herunterfahren einer Anlage geben, um so eine kostspielige Energiespitze zu vermeiden. Während der applikations-spezifische Code Informationen in beliebiger Form weiterverarbeiten kann, müssen die Informationen/Methoden die an die erfindungsgemäße Zentrale Verwaltungsschale (und/oder Industrieanlagenkomponenten zugeordneten Industrieanlagenkomponentenverwaltungsvorrichtungen) zurückgeliefert werden, wiederum dem in den entsprechenden Methodenlisten (Fähigkeitsverzeichnissen) festgelegten Standard entsprechen und daher über den Konnektor übergeben werden.

Zusätzlich muss bei der Übergabe definiert werden, für welche einer Industrieanlagenkomponente zugeordneten Industrieanlagenkomponentenverwaltungsvorrichtung (ID) die Informationen/Methoden übergeben werden sollen.

Durch die eindeutige ID der Industrieanlagenkomponenten zugeordneten Industrieanlagenkomponentenverwaltungsvorrichtungen kann die entsprechende Information an die korrekte Verwaltungsentität übermittelt werden und nachfolgend an die Steuerung des Assets bzw. der jeweiligen Industrieanlagenkomponente.

Wenn mehrere Applikationen (und damit mehrere vorgenannte Konnektoren) dieselben Informationen nutzen sollen und dadurch ggf. auch verschiedene (sich möglicherweise widersprechende) durchzuführende Aktionen an die erfindungsgemäße Zentrale Verwaltungsschale (zurück)liefern, kann erfindungsgemäß eine Priorität des jeweiligen Konnektors festgelegt werden.

Bevorzugt muss der Betreiber der Smart Factory bei der Installation die Priorität des jeweiligen Konnektors festlegen.

Der erfindungsgemäße Konnektor (vorstehend genannte Schnittstelle) sorgt somit für einen geregelten und für den Betreiber einer Smart Factory transparenten Austausch von strukturierten Informationen mit Applikationen und Cloud-Servern von Drittanbietern. Der Betreiber einer Smart Factory kann erfindungsgemäß zu jeder Zeit durch Deinstallation der Applikation - und somit des Konnektors - unter Verzicht auf die entsprechende Applikation den Datenaustausch unterbinden.

Das Industrieanlagensystem kann ferner einen übergeordneten Server aufweisen. Der (übergeordnete) Server enthält relevante Informationen zur eindeutigen Identifikation der Assets. Dazu wird beim nachstehend beschriebenen Verfahren zur Implementierung einer Methodenliste ein Schlüssel, der eine eindeutige ID der Asset-Instanz sowie die Methodenliste und die vorgenannte Schnittstelle (Asset/Verwaltungsschale) enthält, auf dem Server hinterlegt und bei Inbetriebnahme einer Smart Factory durch die Zentrale Verwaltungsschale abgerufen und so die Identität der angeschlossenen Assets überprüft. So kann die Einhaltung von Safety und Security in der Smart Factory gewährleistet werden.

Das beschriebene System zum Betrieb einer Smart Factory, als das erfindungsgemäße Industrieanlagensystem, ermöglicht durch das konsistente Zusammenspiel der oben aufgeführten Elemente eine Integration von Wissensebenen, um so von heterogenen Daten der verschiedenen Anlagensteuerungen bis hin zu spezifischen Funktionalitäten von Applikationen und Cloud-Diensten eine Durchgängigkeit, und somit Interoperabilität, sowie ein hohes Maß an Safety und Security zu schaffen.

Zentraler Bestandteil eines erfindungsgemäßen Systems für den Betrieb eines intelligent vernetzten Produktionssystems ist die technische und in der Folge die betriebswirtschaftliche Auftragsabwicklung. Das beschriebene erfindungsgemäße Konzept lässt sich somit als intelligent vernetztes Produktionsleit- und -steuerungssystem einordnen, da die Zentrale Verwaltungsschale zum einen bereits grundlegende Funktionalitäten eines MES-Systems enthält und zum anderen (bereits vorhandene) MES-, PPS, ERP-Systeme als Applikationen angedockt werden können, um vernetzt zu produzieren. Über die Verwaltungsschale kann dabei jede Komponente/Vorrichtung/Anlage in das Informationsnetz integriert werden. In der Dispositions- und Steuerungshierachie (Automatisierungspyramide, DIN EN 62264-1) kann das erfindungsgemäße Konzept beispielsweise die Ebenen 3-0 abbilden, wobei die Zentrale Verwaltungsschale (bevorzugt zusammen mit etwaigen Applikationen die Ebene 3 (Betriebsleitebene) der Automatisierungspyramide darstellt, die Verwaltungsschale die Ebenen 1 und 2 (Steuerungs- und Feldebene (Subsysteme)) der Automatisierungspyramide darstellt, und die Assets (Komponenten, Vorrichtungen, Anlagen) die Ebene 0 (Prozessebene) der Automatisierungspyramide darstellen.

Im Folgenden soll auf das Registrierungsverfahren und das Implementierungsverfahren gemäß beispielhaften Ausführungsbeispielen der vorliegenden Erfindung eingegangen werden, auf die vorstehend Bezug genommen wurden.

Neben der beschrieben technologischen Umsetzung sind standardisierte Prozesse ein wichtiges Merkmal des erfindungsgemäßen Konzepts. Nur durch eine Registrierung der Beteiligten und einer Produktprüfung kann gewährleistet werden, dass die Kriterien einer Smart Factory gemäß dem erfindungsgemäßen Konzept, also eines erfindungsgemäßen Industrieanlagensystems, erfüllt werden. Die Kriterienerfüllung ist eine grundlegende Voraussetzung, um die Sicherheit, die Datenhoheit und die Interoperabilität gewährleisten zu können.

Dazu kann eine Registrierung der Beteiligten (Hersteller, Betreiber, Applikationsersteller, etc.) in Form von natürlichen und/oder juristischen Personen (also beispielsweise Personen und/oder Unternehmen) vorgenommen werden.

Erfindungsgemäß kann dies die tatsächliche Registrierung (Eintragung), eine Verifizierung (beispielsweise basierend auf einem Handelsregister), eine eindeutige Identifizierung, eine Rollenzuweisung der jeweilig registrierten Person, eine Verantwortlichkeitsvergabe umfassen.

Zur Erreichung der herstellerübergreifenden Interoperabilität, zur Gewährleistung von Safety- und Security-Aspekten und zur Sicherstellung einer hohen Qualität von Produkten gemäß dem erfindungsgemäßen Konzept wird ein strukturierter und definierter Implementierungsprozess vorausgesetzt.

Grundsätzlich sind dem erfindungsgemäßen Konzept nur Produkte zugänglich, die die vorstehend definierten Kriterien und Fähigkeiten erfüllen.

Erfüllt ein Produkt die Kriterien und Fähigkeiten, wird ein Schlüssel für das Produkt erzeugt.

Dies kann beispielsweise durch den vorstehend genannten Server implementiert sein. Alternativ kann die Erzeugung durch eine andere Verwaltungsentität vorgenommen werden.

Zur Generierung des Schlüssels werden beispielsweise Produkttyp (Anlage, Vorrichtung, Komponente) und Kategorie (z.B. Filtertechnik, Schneidtechnik, Gastechnik,...) ausgewählt.

Auf dieser Auswahl basierend wird ein Satz von obligatorisch und die freiwillig zu erfüllenden Daten für den spezifischen Produkttypen gemäß der jeweiligen Methodenliste erstellt und gegebenenfalls angezeigt.

Gemäß beispielhaften Ausführungsbeispielen können mehrere voneinander verschiedene Versionen von Sätzen erstellt und gegebenenfalls angezeigt werden.

Die obligatorischen Daten - z.B. der aktuelle Zustand der Anlage - müssen in jedem Fall durch das Produkt zur Verfügung gestellt werden. Bei den freiwilligen Daten - z.B. die aktuelle Temperatur eines Motors - kann festgelegt werden, ob ein Produkt diese Daten liefern kann und wer diese Daten nutzen darf. Die Festlegung entspricht einer Verpflichtung für das Produkt, diese Daten auch zu liefern.

Enthält das betreffende Produkt weitere Subsysteme, können diese in diesem Verfahrensschritt berücksichtigt werden. Beispielsweise kann der Hersteller einer Anlage die verbauten Komponenten (Motoren, Ventile etc.) angeben. Hierdurch entsteht ein Verweis auf die Methodenliste des jeweiligen Subsystems. Durch den Verweis können später Informationen der Subsysteme mit der Zentralen Verwaltungsschale bzw. bei Zustimmung des Betreibers auch mit den Applikationen der jeweiligen Subsystem-Hersteller ausgetauscht werden.

Falls es sich bei dem zu prüfenden Produkt nicht um ein Einzelprodukt sondern um eine Baureihe handelt, gelten alle Punkte entsprechend für die gesamte Baureihe. Die für Industrie 4.0 geforderte eindeutige Identifizierung wird erfindungsgemäß dadurch gewährleistet, dass zusätzlich die jeweilige individuelle Seriennummer bei der Installation hinzugefügt wird.

Basierend auf den vorstehend umrissenen Einstellungen wird ein individueller Schlüssel generiert. Dieser Schlüssel beinhaltet die spezifische Methodenliste (Fähigkeitsverzeichnis), die Schnittstelle (Asset/Verwaltungsschale), und eine eindeutige Identifikation (ggf. einschließlich einer jeweiligen individuellen Seriennummer bei Baureihen).

Somit kann durch den Schlüssel die Verwaltungsschale für das jeweilige Produkt erzeugt werden und beispielsweise die Verwaltungsschale auf entsprechender Hardware installiert bzw. die Hardware entsprechend eingerichtet werden.

Der Schlüssel wird zudem auch auf dem übergeordneten Server hinterlegt. Wenn das Produkt in einer erfindungsgemäßen Smart Factory in Betrieb genommen wird, kann die Zentrale Verwaltungsschale so das Produkt eindeutig identifizieren, überprüfen ob das Produkt einen gültigen Schlüssel besitzt und welche Daten gemäß Methodenliste mit dem Produkt ausgetauscht werden können. Somit sind die Informationen des Schlüssels an drei Orten (Verwaltungsschale des Produkts, Zentrale Verwaltungsschale und übergeordneter Server) hinterlegt.

Während des Betriebs einer Smart Factory wird von der Zentralen Verwaltungsschale fortlaufend überprüft, ob die eingestellten Daten (Fähigkeitsverzeichnis) auch wirklich vorhanden sind und ob diese in einem sinnvollen Bereich liegen. Dies kann erfindungsgemäß für Diagnostikzwecke genutzt werden, z.B. könnten fehlende Daten auf einen Sensorausfall hindeuten. Dies wird erkannt und (wenn zugelassen) kann eine Meldung an den Hersteller geschickt werden, dass eine Reparatur notwendig ist.

Erfindungsgemäß kann während des Asset-Lebenszuklus' der Hersteller Updates und Upgrades der Methodenliste durchführen.

Updates bedeuten dabei eine zusätzliche Bereitstellung von optionalen Daten in der Methodenliste. Da die aktuelle Methodenlisteversion beim Update nicht verändert wird.

Sollen zusätzliche Daten übermittelt/bereitgestellt werden, die in der aktuellen Version der Methodenliste nicht enthalten sind, muss der Hersteller ein Upgrade der Methodenliste durchführen und gemäß vorstehend skizzierter Prozedur einen neuen Schlüssel generieren. Ein Upgrade kann beispielsweise notwendig werden, wenn eine Anlage nachgerüstet wird oder eine neue Version einer Baureihe entwickelt wurde.

Nach einem Update/Upgrade prüft die erfindungsgemäße Zentrale Verwaltungsschale, welche Applikationen auf die neuen Daten zugreifen wollen. Applikationen können eine bestimmte Version der Methodenliste erfordern.

Updates und Upgrades der erfindungsgemäßen Zentralen Verwaltungsschalen und Verwaltungsschalen (z.B. neue Version des beispielhaften OPC UA Servers) können erfindungsgemäß dem übergeordneten Server bezogen werden.

Die vorstehend beschriebenen Verfahren und Funktionalitäten können durch jeweilige funktionale Elemente, Prozessoren, oder dergleichen umgesetzt werden, wie nachstehend beschrieben wird.

Vorstehend wurden bei der beispielhaften Beschreibung der Vorrichtungen und Systeme lediglich die Elemente beschrieben, die für das Verständnis der Prinzipien der Erfindung relevant sind. Die Vorrichtungen und Systeme können jedoch noch weitere Elemente aufweisen, die für deren jeweiligen Betrieb notwendig sind. Eine Beschreibung solcher Elemente wurde in dieser Beschreibung für ein erleichtertes Verständnis weggelassen. Die Anordnung der funktionalen Blöcke in den Figuren soll die Erfindung nicht beschränken, und die entsprechenden Funktionen können durch einen Block umgesetzt werden oder auf weitere Unterblöcke aufgeteilt sein.

Wenn vorstehend definiert ist, dass eine Vorrichtung (oder eine andere Einrichtung/System) dazu eingerichtet ist, um eine Funktion auszuführen, dann ist dies als äquivalent zu einer Beschreibung auszulegen, dergemäß (zumindest) ein Prozessor oder eine entsprechende Schaltung, potentiell in Kooperation mit in einem Speicher der jeweiligen Vorrichtung gespeichertem Computerprogramm-Code, dazu eingerichtet ist, um die Vorrichtung bzw. das System dazu zu bringen, zumindest die Funktion durchzuführen bzw. darzustellen.

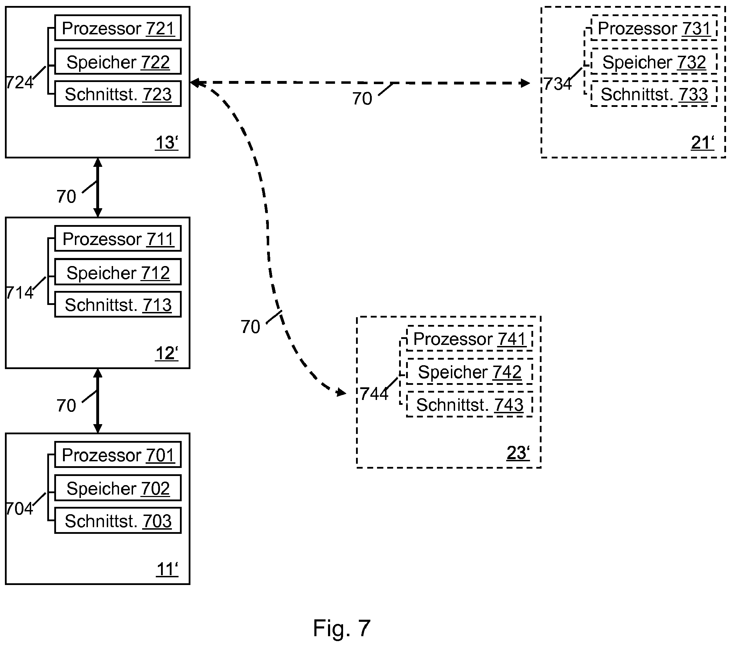

In Figur 7 ist eine alternative Veranschaulichung von Vorrichtungen gemäß beispielhaften Ausführungsbeispielen der vorliegenden Erfindung. Wie in Figur 7 gezeigt, umfasst das System 10 die Industrieanlagenkomponente 11' (entsprechend der Industrieanlagenkomponente 11), die Industrieanlagenkomponentenverwaltungsvorrichtung 12' (entsprechend der Industrieanlagenkomponentenverwaltungsvorrichtung 12), die Industrieanlagenverwaltungsvorrichtung 13' (entsprechend der Industrieanlagenverwaltungsvorrichtung 13), gegebenenfalls der Server 21' (entsprechend dem Server 21), und gegebenenfalls das Zugriffselement 23' (entsprechend dem Zugriffselement 23).

Jedes aus der Industrieanlagenkomponente 11', der Industrieanlagenkomponentenverwaltungsvorrichtung 12', der Industrieanlagenverwaltungsvorrichtung 13', dem Server 21', und dem Zugriffselement 23' umfasst (mindestens) einen Prozessor 701 (711, 721, 731, 741), (mindestens) einen Speicher 702 (712, 722, 732, 742), und (mindestens) eine Schnittstelle 703 (713, 723, 733, 743), die mittels eines Busses 704 (714, 724, 734, 744) oder dergleichen miteinander verbunden sind. Die Industrieanlagenkomponente 11', die Industrieanlagenkomponentenverwaltungsvorrichtung 12', die Industrieanlagenverwaltungsvorrichtung 13', der Server 21', und das Zugriffselement 23' kann mittels Verbindungen 70 jeweils mit anderen Vorrichtungen oder Einrichtungen verbunden sein. Dabei können die Verbindungen zu anderen Vorrichtungen bzw. Einrichtungen mittels einer (derselben) Schnittstelle (wie in Figur 7 veranschaulicht) oder abweichend davon mittels unterschiedlichen, jeweilig zugeordneten Schnittstellen bereitgestellt werden.

Gemäß beispielhaften Ausführungsbeispielen der vorliegenden Erfindung umfasst das Industrieanlagensystem also zumindest einen Prozessor, zumindest einen Speicher einschließlich einem Computerprogramm-Code, und zumindest eine Schnittstelle, die zur Kommunikation mit zumindest Vorrichtungen eingerichtet ist. Der zumindest eine Prozessor mit dem zumindest einen Speicher und dem Computerprogramm-Code ist dazu eingerichtet, um ein Speichern (daher umfasst die Vorrichtung eine entsprechende Einrichtung zum Speichern), bei jeder aus der zumindest einen Industrieanlagenkomponentenverwaltungsvorrichtung, eines Fähigkeitsverzeichnisses der jeweilig zugeordneten Industrieanlagenkomponente, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, ein Speichern, bei der Industrieanlagenverwaltungsvorrichtung, der Fähigkeitsverzeichnisse der zumindest einen Industrieanlagenkomponente, und ein Kommunizieren (daher umfasst die Vorrichtung eine entsprechende Einrichtung zum Kommunizieren), durch die Industrieanlagenverwaltungsvorrichtung, mit jeder aus der zumindest einen Industrieanlagenkomponentenverwaltungsvorrichtung unter Verwendung des durch das Fähigkeitsverzeichnis der jeweils zugeordneten Industrieanlagenkomponente umfassten Identifizierungszeichens, durchzuführen.

Für weitere Details bezüglich des Betriebs bzw. Funktionalitäten der einzelnen Vorrichtungen wird auf die vorstehende Beschreibung in Kombination mit Figuren 1 bis 6 verwiesen.

In Hinblick auf das Obige sind Maßnahmen bzw. Mittel zur Realisierung eines Industrieanlagensystems bereitgestellt. Solche Maßnahmen bzw. Mittel umfassen beispielhaft ein Speichern, bei jeder aus der zumindest einen Industrieanlagenkomponentenverwaltungsvorrichtung, eines Fähigkeitsverzeichnisses der jeweilig zugeordneten Industrieanlagenkomponente, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, ein Speichern, bei der Industrieanlagenverwaltungsvorrichtung, der Fähigkeitsverzeichnisse der zumindest einen Industrieanlagenkomponente, und ein Kommunizieren, durch die Industrieanlagenverwaltungsvorrichtung, mit jeder aus der zumindest einen Industrieanlagenkomponentenverwaltungsvorrichtung unter Verwendung des durch das Fähigkeitsverzeichnis der jeweils zugeordneten Industrieanlagenkomponente umfassten Identifizierungszeichens.

## Patentansprüche

1. Industrieanlagensystem, mit
zumindest einer Industrieanlagenkomponente,
zumindest einer jeweils einer aus der zumindest einen Industrieanlagenkomponente zugeordneten Industrieanlagenkomponentenverwaltungsvorrichtung zur Ansteuerung und Verwaltung der jeweiligen Industrieanlagenkomponente, und
einer Industrieanlagenverwaltungsvorrichtung zur Ansteuerung und Verwaltung einer die zumindest eine Industrieanlagenkomponente umfassenden Industrieanlage, wobei
jede aus der zumindest einen Industrieanlagenkomponentenverwaltungsvorrichtung dazu eingerichtet ist, um ein Fähigkeitsverzeichnis der jeweilig zugeordneten Industrieanlagenkomponente zu speichern, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst, und
die Industrieanlagenverwaltungsvorrichtung dazu eingerichtet ist, um
die Fähigkeitsverzeichnisse der zumindest einen Industrieanlagenkomponente zu speichern, und
mit jeder aus der zumindest einen Industrieanlagenkomponentenverwaltungsvorrichtung unter Verwendung des durch das Fähigkeitsverzeichnis der jeweils zugeordneten Industrieanlagenkomponente umfassten Identifizierungszeichens zu kommunizieren.

2. Industrieanlagensystem nach Anspruch 1, wobei jedes der Fähigkeitsverzeichnisse umfasst
zumindest einen hinterlegten statischen Komponentenparameter der jeweiligen Industrieanlagenkomponente, der für eine Eigenschaft der jeweiligen Industrieanlagenkomponente steht, und/oder
eine Komponentenbetriebswertspezifizierung zumindest eines durch die jeweilige Industrieanlagenkomponente zu erfassenden dynamischen Komponentenbetriebswerts der jeweiligen Industrieanlagenkomponente, der für einen Zustand der jeweiligen Industrieanlagenkomponente steht, und/oder
zumindest eine Synthesemethode zur auf zumindest einem durch das Fähigkeitsverzeichnis spezifizierten dynamischen Komponentenbetriebswert basierenden Generierung von Informationen für eine Ansteuerung und/oder Verwaltung der jeweiligen Industrieanlagenkomponente, und/oder
zumindest eine Eingriffsmethode zum Eingriff in einen Betrieb der jeweiligen Industrieanlagenkomponente.

3. Industrieanlagensystem nach einem der Ansprüche 1 oder 2, ferner mit
einem Server, der dazu eingerichtet ist, um jeweils einen Schlüssel für jede aus der zumindest einen Industrieanlagenkomponente zu speichern, wobei
jeder der Schlüssel umfasst
das Fähigkeitsverzeichnis der jeweiligen Industrieanlagenkomponente,
das Identifizierungszeichen der jeweiligen Industrieanlagenkomponente, und
eine Datenaustauschspezifizierung bezüglich mit der jeweiligen Industrieanlagenkomponente auszutauschenden Daten.

4. Industrieanlagensystem nach Anspruch 3, wobei
der Server ferner dazu eingerichtet ist, um Registrierungsinformationen und mit den jeweiligen Registrierungsinformationen verknüpfte Funktionsberechtigungen zu speichern.

5. Industrieanlagensystem nach Anspruch 3 oder 4, wobei
der Server ferner dazu eingerichtet ist, um ein Fähigkeitsgerüst zu speichern, wobei
das Fähigkeitsgerüst eine Vielzahl von Komponentenparameterspezifizierungen jeweils eines statischen Komponentenparameters, eine Vielzahl von Komponentenbetriebswertspezifizierungen jeweils eines dynamischen Komponentenbetriebswerts, eine Vielzahl von Synthesemethoden zur Generierung von Informationen, und eine Vielzahl von Eingriffsmethoden zum Eingriff in einen Betrieb einer Industrieanlagenkomponente aufweist, und wobei
jedes aus der Vielzahl von Komponentenparameterspezifizierungen, der Vielzahl von Komponentenbetriebswertspezifizierungen, der Vielzahl von Synthesemethoden, und der Vielzahl von Eingriffsmethoden zumindest einem Industrieanlagenkomponententyp zugeordnet ist.

6. Industrieanlagensystem nach Anspruch 5, wobei
das Fähigkeitsverzeichnis jedes der Schlüssel basierend auf dem Fähigkeitsgerüst und einem Industrieanlagenkomponententyp der jeweiligen Industrieanlagenkomponente erzeugt ist.

7. Industrieanlagensystem nach einem der Ansprüche 3 bis 6, wobei
die Datenaustauschspezifizierung jedes der Schlüssel basierend auf dem Fähigkeitsverzeichnis des jeweiligen Schlüssels erzeugt ist.

8. Industrieanlagensystem nach einem der Ansprüche 3 bis 7, wobei
der Server dazu eingerichtet ist, um einen der Schlüssel zu der Industrieanlagenverwaltungsvorrichtung zu übertragen, und
die Industrieanlagenverwaltungsvorrichtung dazu eingerichtet ist, um den einen der Schlüssel zu empfangen, und
das Fähigkeitsverzeichnis der jeweiligen Industrieanlagenkomponente aus dem empfangenen Schlüssel zu extrahieren.

9. Industrieanlagensystem nach Anspruch 8, wobei
die Industrieanlagenverwaltungsvorrichtung dazu eingerichtet ist, um den empfangenen Schlüssel zu der Industrieanlagenkomponentenverwaltungsvorrichtung entsprechend der jeweiligen Industrieanlagenkomponente zu übertragen, und
die Industrieanlagenkomponentenverwaltungsvorrichtung dazu eingerichtet ist, um den Schlüssel zu empfangen, und
das Fähigkeitsverzeichnis der jeweiligen Industrieanlagenkomponente aus dem empfangenen Schlüssel zu extrahieren.

10. Industrieanlagensystem nach Anspruch 8 oder 9, wobei
die Industrieanlagenverwaltungsvorrichtung dazu eingerichtet ist, um
ein Hinzufügen einer Industrieanlagenkomponente zu der Industrieanlage und das Identifizierungszeichen der hinzugefügten Industrieanlagenkomponente zu erkennen, und um
basierend auf dem Identifizierungszeichen der hinzugefügten Industrieanlagenkomponente den Schlüssel bezüglich der hinzugefügten Industrieanlagenkomponente bei einem Server anzufordern.

11. Industrieanlagensystem nach einem der Ansprüche 1 bis 10, wobei
die Industrieanlagenverwaltungsvorrichtung ferner dazu eingerichtet ist, um
eine Zugriffsschnittstelle für ein Zugriffselement bereitzustellen, und
eine der Zugriffsschnittstelle für das Zugriffselement zugeordnete Zugriffsberechtigungsinformation zu speichern, die darauf hinweist, ob das Zugriffselement berechtigt ist, über die Zugriffsschnittstelle auf einen statischen Komponentenparameter einer Zugriffsindustrieanlagenkomponente, und/oder einen dynamischen Komponentenbetriebswert der Zugriffsindustrieanlagenkomponente, und/oder eine Synthesemethode der Zugriffsindustrieanlagenkomponente, und/oder eine Eingriffsmethode der Zugriffsindustrieanlagenkomponente entsprechend des Fähigkeitsverzeichnisses der Zugriffsindustrieanlagenkomponente zuzugreifen.

12. Industrieanlagensystem nach Anspruch 11, wobei
die Industrieanlagenverwaltungsvorrichtung ferner dazu eingerichtet ist, um eine Zugriffsberechtigungsinformationseingabe bezüglich der der Zugriffsschnittstelle für das Zugriffselement zugeordneten Zugriffsberechtigungsinformation zu empfangen.

13. Industrieanlagensystem nach Anspruch 11 oder 12, wobei
die Industrieanlagenverwaltungsvorrichtung ferner dazu eingerichtet ist, um
eine Zugriffsanforderung auf die Zugriffsindustrieanlagenkomponente durch das Zugriffselement über die Zugriffsschnittstelle zu empfangen, und
auf die Zugriffsanforderung basierend auf der Zugriffsberechtigungsinformation zu antworten.

14. Industrieanlagensystem nach einem der Ansprüche 11 bis 13, wobei
die Industrieanlagenverwaltungsvorrichtung ferner dazu eingerichtet ist, um
eine Vielzahl von Zugriffsschnittstellen für eine Vielzahl von Zugriffselementen bereitzustellen, wobei
jeder der Vielzahl von Zugriffsschnittstellen eine Priorität zugeordnet ist, und
die Industrieanlagenverwaltungsvorrichtung ferner dazu eingerichtet ist, um
konkurrierende Zugriffsanforderungen über mehrere der Vielzahl von Zugriffsschnittstellen entsprechend der jeweiligen Priorität zu berücksichtigen.

15. Industrieanlagensystem nach einem der Ansprüche 11 bis 14, wobei
das Zugriffselement eines aus einer Cloudeinrichtung und einer Applikationseinrichtung ist.

16. Industrieanlagensystem nach einem der Ansprüche 1 bis 15, wobei
Kommunikationseinrichtungen des Industrieanlagensystems dazu eingerichtet sind, um mittels einem Open-Platform-Communications-Unified-Architecture-Protokoll zu kommunizieren.

17. Verfahren für ein Industrieanlagensystem, mit
zumindest einer Industrieanlagenkomponente,
zumindest einer jeweils einer aus der zumindest einen Industrieanlagenkomponente zugeordneten Industrieanlagenkomponentenverwaltungsvorrichtung zur Ansteuerung und Verwaltung der jeweiligen Industrieanlagenkomponente, und
einer Industrieanlagenverwaltungsvorrichtung zur Ansteuerung und Verwaltung einer die zumindest eine Industrieanlagenkomponente umfassenden Industrieanlage, wobei das Verfahren umfasst
ein Speichern, bei jeder aus der zumindest einen Industrieanlagenkomponentenverwaltungsvorrichtung, eines Fähigkeitsverzeichnisses der jeweilig zugeordneten Industrieanlagenkomponente, wobei das Fähigkeitsverzeichnis eine Kommunikation mit der jeweiligen Industrieanlagenkomponente spezifiziert und ein Identifizierungszeichen der jeweiligen Industrieanlagenkomponente umfasst,
ein Speichern, bei der Industrieanlagenverwaltungsvorrichtung, der Fähigkeitsverzeichnisse der zumindest einen Industrieanlagenkomponente, und
ein Kommunizieren, durch die Industrieanlagenverwaltungsvorrichtung, mit jeder aus der zumindest einen Industrieanlagenkomponentenverwaltungsvorrichtung unter Verwendung des durch das Fähigkeitsverzeichnis der jeweils zugeordneten Industrieanlagenkomponente umfassten Identifizierungszeichens.

18. Computerprogrammprodukt mit einem computerausführbaren Computerprogramm-Code, der, wenn das Programm auf einem Computer ausgeführt wird, dazu eingerichtet ist, um den Computer dazu zu bringen, das Verfahren nach Anspruche 17 auszuführen, wobei optional
das Computerprogrammprodukt ein computerlesbares Medium umfasst, auf dem der computerausführbare Computerprogramm-Code gespeichert ist, und/oder wobei das Programm direkt in einen internen Speicher des Computers oder einen Prozessor des Computers ladbar ist.
